(19) Europäisches Patentamt
European Patent Office
Office européen des brevets

(11) Publication number: 0 083 220
B1

(12) # EUROPEAN PATENT SPECIFICATION

(45) Date of publication of patent specification: 28.09.88

(21) Application number: 82306909.1

(22) Date of filing: 23.12.82

(51) Int. Cl.[4]: E 04 F 15/18, E 04 F 15/22, B 32 B 27/30, E 04 F 15/10, D 06 N 7/00, G 06 F 15/46

(54) ## Loose-lay flooring.

(30) Priority: 28.12.81 US 335190
26.07.82 US 400437

(43) Date of publication of application:
06.07.83 Bulletin 83/27

(45) Publication of the grant of the patent:
28.09.88 Bulletin 88/39

(84) Designated Contracting States:
BE DE FR GB LU NL

(56) References cited:
CH-A- 426 710
DE-A-2 927 425
DE-B-1 224 020
FR-A- 758 144
US-A-3 364 058
US-A-3 538 590
US-A-3 819 438
US-A-3 821 059
US-A-4 042 986
US-A-4 066 813
US-A-4 190 694
US-A-4 230 762
US-A-4 350 727

(73) Proprietor: Armstrong World Industries, Inc.
P.O. Box 3001 Liberty and Charlotte Streets
Lancaster Pennsylvania 17604 (US)

(72) Inventor: Eckert, Donald Charles
750 West Vine Street
Lancaster, PA 17603 (US)
Inventor: George, Jay Richard
R.D. 6
Manheim, PA 17545 (US)
Inventor: Lilley, George Lawrence
R.D. 3
Manheim, PA 17545 (US)
Inventor: Sensenig, Darryl Lamar
363 Hershey Mill Road
Mountville, PA 17554 (US)
Inventor: Tshudy, James Arthur
Box 224, R. D. 4
Ephrata, PA 17522 (US)

(74) Representative: Darby, David Thomas et al
Abel & Imray Northumberland House
303-306 High Holborn
London WC1V 7LH (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 083 220 B1

**Description**

The present invention relates to loose-lay flooring and more particularly to loose-lay flooring which will be suitable for use over stable or unstable surfaces.

Decorative floor coverings comprising resilient material have been in use for many years. Usually these floor coverings have been fastened to subfloors with adhesives; however, the installation of such coverings is time consuming and expensive. Therefore, it is desirable to place the floor coverings on subfloors without the use of adhesives; i.e., to loosely lay the covering on the subfloor. In such circumstances, the weight of the loose-lay floor covering itself tends to hold it in place, although it may also be pinned to the subfloor by furniture, appliances, and other objects which rest upon it.

Loose lay floor coverings should have the following characteristics; namely, they should not curl or dome; they should not shrink or grow with time or under the influence of environmental change; they should stay in place under the influence of a rolling load; and they should withstand or accommodate the movement of subfloors without buckling. The latter problem creates special difficulties because subfloors range from those which are dimensionally stable (e.g. concrete) to those which are dimensionally unstable (e.g. particleboard). Other problems are also encountered depending on the type of subfloor over which the loose-lay floor is placed. Thus, the flooring industry has dedicated a considerable amount of time and effort to develop a loose-lay flooring which will have the aforementioned characteristics.

In U.S. Patent No. 3,819,438 there is described a flexible, foamed plastic surface covering having a strengthening or dimensionally stabilizing non-foamed layer of crosslinked polymer between two foamed layers. The specification also refers by number to other U.S. patents describing surface coverings with reinforcing layers; it is silent, however, on whether the surface covering described therein is to be used as a loose-lay covering or is to be adhered to the substrate to which it is applied.

Various references are found in the prior art pertaining to loose-lay flooring. U.S. Patent No. 3,821,059 discloses segmentally accommodating loose-lay flooring comprising a plurality of rigid elements that distribute stresses within the flooring matrix such that they appear as a series of small distortions. U.S. Patent No. 3,364,058 discloses a composite floor comprising a base support, a release coat, a waterproofing coat, a wear coat, and a top layer, said composite floor being designed to avoid damage caused by the movement of the subflooring. U.S. Patent No. 4,066,813 discloses a method for reducing growth properties of resilient flooring having a fibrous cellulosic backing by incorporating a small amount of a growth inhibitor. In addition, a variety of patents address the problem of stress relief by inclusion of a series of deformable geometric configurations into structural matrices. Examples of such are U.S. Patent Nos. 4,146,666; 4,049,855; 4,035,536; and 4,020,205. Nevertheless, none of the prior art references adequately teach how to construct a flooring material which may be loosely laid over the surface of a stable or unstable subfloor.

Accordingly, one objective of the present invention is to provide processes for designing and constructing a loose-lay floor structure which will accommodate the movement of an unstable subfloor without buckling.

Another objective of the present invention is to provide processes for designing and constructing a loose-lay floor structure which will accommodate the movement of any type of subfloor without buckling, doming and curling, and which will not move under a rolling load.

Yet another objective of the present invention is to provide a process by which a flooring material having predictable subfloor accommodation characteristics may be designed.

Still another objective of the present invention is to provide floor structures which will have the aforementioned attributes.

Still yet another objective of the present invention is to provide methods by which products comprising one or more reinforcing layers may be modified *in situ*, that is to say, after incorporation in the matrix, to provide suitable buckling characteristics.

These and other advantages of the present invention will become apparent from the detailed description of the preferred embodiments which follow.

Figs. 1A and 1B illustrate a diagram of a computer program which may be used to calculate the contour curves of the present invention.

Fig. 2 illustrates the contour curve of Example 1.

Fig. 3 illustrates the contour curve of Example 2.

Fig. 4 illustrates a structure as set forth in Example 2.

Fig. 5 illustrates a structure as set forth in Example 2.

Fig. 6 illustrates a structure as set forth in Example 3.

Fig. 7 illustrates a structure as set forth in Example 3.

Fig. 8 illustrates a structure as set forth in Example 4.

Fig. 9 illustrates the contour curve of Example 4.

Fig. 10 illustrates the contour curve of Example 7.

Fig. 11 illustrates the contour curve of Example 8.

Fig. 12 illustrates one example of a continuous modification pattern.

Fig. 13 illustrates one example of a modified continuous pattern.

Fig. 14 illustrates one example of a discontinuous pattern.

Fig. 15 illustrates the contour curve applicable to Examples 9—13.

The present invention concerns loose-lay floor structures comprising at least two layers of reinforcing material and processes to design and produce them. Loose-lay floors may be designed which will be suitable for use over stable subfloors, or which will accommodate the movement of very unstable subfloors. Flooring constructed according to this invention will have the ability to resist buckling, curling and doming, and will resist moving under a rolling load. A process is also provided for modifying structures comprising a single reinforcing layer *in situ* so as to convert structures with unacceptable buckling characteristics into structures with acceptable buckling characteristics.

In one embodiment, the present invention relates to a process for making and, eventually, manufacturing and laying, a resilient loose-lay floor structure for use over subflooring having an ascertainable subfloor dimensional change. Said process comprises the steps of selecting a target critical buckle strain for said floor structure, said critical buckle strain being greater than the subfloor dimensional change; selecting an approximate basis weight for said floor structure, said basis weight being within the range of from about 2 to about 10 pounds per square yard (i.e., from about 1 to about 5.5 kilograms per square meter); plotting a contour curve of the selected critical buckle strain for said selected basis weight by varying the bending stiffness values from about 0 to about 9 inch-pounds (i.e., from about 0 to about 1 Newton-meter) and by varying the relaxed compressive stiffness values from about 0 to about 10,000 pounds per inch of width (i.e., from about 0 to about $1.75 \times 10^6$ Newtons per meter of width); determining from said contour curve the range defined by the minimum and maximum relaxed compressive stiffness values corresponding to bending stiffness values of about 0.1 and about 9 inch-pounds (i.e., about 0.01 and about 1 Newton-meter), respectively; selecting a matrix material and at least two layers of reinforcing material such that the sum of the relaxed compressive stiffness values for said materials falls within the determined range, said matrix material and said reinforcing materials being selected such that the sum of the relaxed compressive stiffness values for said reinforcing materials is not less than the sum of the relaxed compressive stiffness values for said matrix material; determining from said contour curve the bending stiffness value applicable to the sum of the relaxed compressive stiffness values for said reinforcing materials and said matrix material, and disposing said layers of reinforcing material are disposed within said matrix material such that the measured bending stiffness of the resultant floor structure corresponds to the determined bending stiffness, at least one reinforcing layer being approximately above the neutral bending plane of said resultant floor structure and at least one reinforcing layer being approximately below said neutral bending plane, the critical buckle strain for said resultant floor structure being approximately equivalent to the target critical buckle strain and greater than the strain expected to be caused by the subfloor dimensional change. The structure is then manufactured accordingly, and supplied for laying on the corresponding subfloor.

In a second embodiment, the present invention relates to a process for making a self-accommodating resilient loose-lay floor structure. Said process comprises the steps of selecting a matrix material and at least one reinforcing material, and disposing at least two layers of reinforcing material within said matrix material such that the bending stiffness of said loose-lay floor structure is from about 0.1 to about 9 inch-pounds (i.e., from about 0.01 to about 1 Newton-meter), at least one layer of reinforcing material being approximately above the neutral bending plane of said loose-lay floor structure and at least one layer of reinforcing material being approximately below said neutral bending plane, said matrix material and said reinforcing materials being selected such that the sum of the relaxed compressive stiffness values for said reinforcing materials is not less than the relaxed compressive stiffness value for said matrix material and the basis weight of said floor structure is from about 2 to about 10 pounds per square yard (i.e., from about 1 to about 5.5 kilograms per square meter), whereby said loose-lay floor structure accommodates the movement of a subfloor over which it is used. Also provided by this embodiment is a floor structure made by the process in position on a subfloor the dimensional change of which will provide a strain less than the critical buckle strain.

In a third embodiment, the present invention relates to a self-accommodating resilient loose-lay floor structure. Said floor structure has a basis weight of from about 2 to about 10 pounds per square yard (i.e., from about 1 to about 5.5 kilograms per square meter) and comprises a matrix material and at least two layers of reinforcing material disposed within said matrix material, at least one of said layers being approximately above the neutral bending plane of said loose-lay floor structure and at least one of said layers being approximately below said neutral bending plane. The sum of the relaxed compressive stiffness values for said reinforcing materials is not less than the sum of the relaxed compressive stiffness values for said matrix materials. Said floor structure has a bending stiffness of from about 0.1 to about 9 inch-pounds (i.e., from about 0.01 to about 1 Newton-meter) and accommodates the movement of a subfloor over which it is used. Also provided by the embodiment is the structure in position on a subfloor the dimensional change of which will provide a strain less than the critical buckle strain.

In a fourth embodiment, the present invention comprises a process for treating a potential resilient loose-lay floor structure having a basis weight of from about 2 to about 10 pounds per square yard (i.e., from about 1 to about 5.5 kilograms per square meter) and having at least two layers of reinforcing material disposed within a matrix material, at least one layer of reinforcing material being approximately above the neutral bending plane of said floor structure and at least one layer of reinforcing material being approximately below said neutral bending plane, said structure being unsuitable for use as a loose-lay floor structure over a subfloor having an ascertained subfloor dimensional change because it has a bending stiffness which is in excess of about 9 inch-pounds (i.e., about 1 Newton-meter), or a critical buckle strain which is not greater than the ascertained subfloor dimensional change, or both, said process comprising the modification of at least one of said reinforcing layers such the bending stiffness of the resultant flooring structure is within the range of from about 0.1 to about 9 inch-pounds (i.e., from about 0.01 to about 1 Newton-meter) and the critical buckle strain of said resultant flooring structure is greater than said ascertained subfloor dimensional change. Also provided by this embodiment is a floor structure made by the process in position on a subfloor the dimensional change of which will provide a strain less than the critical buckle strain.

In a fifth embodiment, the present invention comprises a process for preparing a flooring structure comprising a single reinforcing layer, said structure being suitable to accommodate the subfloor movement of a subfloor having an ascertainable subfloor dimensional change, said process comprising the steps of selecting a flooring structure comprising a single encapsulated glass reinforcing layer, the critical buckle strain of said structure being less than the subfloor dimensional change, and modifying said flooring structure *in situ* such that the critical buckle strain becomes greater than said subfloor dimensional change. Also provided by this embodiment is a floor structure made by the process in position on a subfloor the dimensional change of which will provide a strain less than the critical buckle strain.

In a sixth embodiment, the present invention comprises a flooring structure comprising a single reinforcing layer, said structure having been modified *in situ* such that its critical buckle strain is greater than the subfloor dimensional change of the subfloor over which said structure will be used. Also provided by the embodiment is the structure in position on a subfloor the dimensional change of which will provide a strain less than the critical buckle strain.

As used herein, "loose-lay floor structure" is a floor structure which will lie flat on a stable or unstable subfloor, which will resist doming, curling, buckling, or movement under a rolling load, which preferably has a low structural stability value as defined hereinbelow, and which need not be held in place using adhesives.

As used herein, "accommodating floor structure" is a loose-lay floor structure which will accommodate or alter its size and shape to match that of an unstable subfloor.

As used herein, "subfloor dimensional change" is a measure of the change in length of a subflooring material under the conditions of its environment. This change is expressed herein as change per unit length.

As used herein, "critical buckle strain" is the strain at which a loose-lay floor structure that is compressed in a planar fashion will buckle.

As used herein, "relaxed compressive stiffness" is the approximate compressing force per inch (meter) of width divided by the induced strain, the value of said relaxed compressive stiffness being projected to a 1000-hour load relaxation and the compressive force being applied in a planar fashion, the measurement being taken in the linear portion of the stress-strain curve.

As used herein, "relaxed tensile stiffness" is the approximate stretching force per inch (meter) of width divided by the induced strain, the value of said relaxed tensile stiffness being projected to a 1000-hour load relaxation and the stretching force being applied in a planar fashion, the measurement being taken in the linear portion of the stress-strain curve.

As used herein, "basis weight" is the weight in pounds per square yard (kilograms per square meter) of a loose-lay flooring material.

As used herein, "matrix material" comprises all components of a loose-lay flooring material, excluding the reinforcing material.

As used herein, "bending stiffness" is the resistance to bending demonstrated by a loose-lay flooring material as measured in inch-pounds (Newton-meters) using a cantilever beam or equivalent method, more especially that described in ASTM D747.

As used herein, "bending resistance" is a material parameter used in the theoretical derivation of the potential energy expression, and characterizes the resistance of the flooring material to bending.

As used herein, "structural stability" is a measure of the change in length in percent of a flooring sample which has been heated at 180°F (82°C) for six hours and reconditioned at 73.4°F (23°C) and 50% relative humidity for one hour.

As used herein, the "neutral bending plane" of a strip of material, the ends of which are being subjected to a downward bending force, is an imaginary line within said material above which the material is under tension and below which it is under compression.

Loose-lay flooring should be expected to maintain within acceptable limits the shape and dimensions of the room in which it is placed, and it should not shrink from the walls leaving unsightly gaps. This requirement applies regardless of the nature of the subfloor. Therefore, a desirable trait for such flooring is that it have a structural stability under normal conditions of not more than 0.5% and preferably not more than 0.1%.

If the subflooring on which the loose-lay floor structure is to be placed is stable, the characteristics which must be demonstrated by the loose-lay floor are less stringent than for unstable subfloors since minimal dimensional changes of the subflooring result in minimal planar compressions of the floor structure. Nevertheless, problems can still be encountered which relate to doming and curling, and to movement under a rolling load.

Conversely, unstable subfloors such as particleboard dramatically increase the requirements for a loose-lay flooring because such subfloors tend to expand and contract depending on the temperature and relative humidity conditions within the structure in which the subfloor resides. During winter months, dry furnace-heated air tends to shrink unstable subfloors, whereas during humid summer months such subfloors tend to expand. A loose-lay floor structure that is laid over such a subsurface at its maximum expanded position and is pinned, attached or otherwise restricted by heavy objects such as appliances experiences a variety of stresses when the subfloor changes its dimensions. A loose-lay flooring structure constructed according to the prior art and having the required structural stability is often unable to accommodate these stresses, thus leading to doming, buckling or curling of the flooring.

Surprisingly, we have discovered that loose-lay floor structures comprising at least two layers of reinforcing material may be constructed which will meet all of the aforementioned criteria. As a general rule, loose-lay floor structures with superior accommodation characteristics result when the basis weight and the bending stiffness are increased and the compressive stiffness is lowered. Accordingly, by following processes as set forth hereinbelow, loose-lay flooring can be constructed which will have predictable characteristics when applied over a subfloor having an ascertainable subfloor dimensional change.

One factor which must be considered at the outset is the amount of variation which can be expected from a given subfloor. For example, subfloor shrinkage can be expected to place a strain on the loose-lay floor structure when it is compressed in a planar fashion by the movement of the subfloor. If a flooring structure is constructed with a critical buckle strain equivalent to the expected subfloor dimensional change and the flooring is compressed by the maximum expected shrinkage of the subfloor, it will buckle. Thus, the critical buckle strain of the floor structure must be greater than the expected strain which will result from maximum subfloor movement. A loose-lay floor structure will experience the maximum compressive strain if it has been installed on subflooring which is in its maximum expanded condition; therefore, it should be designed to withstand this strain without buckling.

Three significant parameters will affect the tendency of the loose-lay floor structure to buckle. These are the basis weight, bending stiffness and the relaxed compressive stiffness, which were defined above. The basis weight of ordinarily used resilient flooring material usually varies from about 2 to about 10 pounds per square yard (i.e., from about 1 to about 5.5 kilograms per square meter). As a general rule, the greater the instability of the subfloor, the greater the basis weight will have to be to prevent buckling because the added weight of the flooring requires an increased compressing force to induce buckling.

A second parameter is the bending stiffness of the loose-lay flooring, the bending stiffness being a measure of the ease with which the flooring will bend and buckle. Resilient sheet flooring material will normally range in stiffness from very flexible (i.e. having a bending stiffness of *ca* 0.1 inch-pounds or 0.01 Newton-meters) to fairly stiff (i.e., having a bending stiffness of *ca* 9 inch-pounds or 1 Newton-meter). Sheet flooring will rarely have a bending stiffness exceeding the latter value because it must be transported on rolls. Should the bending stiffness be greater than 9 inch-pounds (1 Newton-meter), problems can be encountered with cracking, bending, and folding when the flooring is wound on small diameter rolls.

The third parameter is the relaxed compressive stiffness which will be discussed in more detail below.

The essence of the present invention is that if one skilled in the art knows the amount of subfloor dimensional change that will occur, that person can design and construct a loose-lay floor structure which will have a critical buckle strain that is greater than the strain which will be exerted on the loose-lay flooring by the subfloor. Preferably, the loose-lay floor structure will also have a suitable structural stability. Using mathematical formulas derived from the theory of buckling, one or more critical buckle strain contour curves can be generated for selected basis weights by varying the relaxed compressive stiffness values and the bending stiffness values or, alternatively, the bending resistance values. For convenience, the curves displayed herein illustrate plots of bending stiffness versus relaxed compressive stiffness for constant basis weight and constant critical buckle strain values. By determining a range of applicable compressive stiffness values from the curve, appropriate matrix materials and reinforcing materials can be selected. A bending stiffness value for the floor structure can then be determined for these materials and a suitable floor structure can be constructed by appropriately disposing at least two layers of reinforcing material within said matrix material.

The relaxed compressive stiffness of the loose-lay floor structure will approximate the sum of the relaxed compressive stiffness values for the components of said flooring. Thus, by obtaining the relaxed compressive stiffness values for materials which may comprise the matrix material and the reinforcing layers, at least two of the latter to be disposed within the matrix material, appropriate materials can be selected such that the sum of the respective relaxed compressive stiffness values falls approximately within the range of relaxed compressive stiffness values indicated by the curve. The actual relaxed compressive stiffness value may then be determined by constructing a test floor structure and, using this value, the target bending stiffness value may be determined from the curve. Alternatively, the sum of the relaxed compressive (tensile) stiffness values may be used to theoretically predict the required bending stiffness. It must be recognised that results which are theoretically calculated for a flooring structure will depend to a certain extent on experimentally measured values as well as on other variables which are less predictable; therefore, some variation from the theoretically predicted results can be expected. For that reason, this latter approach is less satisfactory.

Once the desired bending stiffness has been determined, the reinforcing layers may be disposed within the matrix material such that a bending stiffness essentially equivalent to the desired bending stiffness is obtained. The loose-lay floor structure thus obtained should have a critical buckle strain capable of withstanding the strain which will be imposed on it by the subfloor.

Stiffness is a well-known characteristic which may be determined in a variety of ways. Standard tests are well known in the art. For example, ANSI/ASTM D 747, also known as the Olsen Stiffness Test, describes a standard method for determining the stiffness of plastics using a cantilever beam. For purposes of the present invention, satisfactory values may be obtained using a 1-inch (2.54 cm) span and measuring the bending moment values at a bend angle of 20°. As used herein, the bending moment determined by the Olsen Stiffness Test is equivalent to the bending stiffness.

More difficulty is encountered in obtaining relaxed compressive stiffness data for materials which may be used to construct the loose-lay floor structure. Such measurements may readily be made by conventional means for the matrix material, taking into account the relaxation of the material under stress with time. The resulting relaxed compressive stiffness values projected to 1000-hour relaxation by means well known in the art should be used to practice the present invention.

Conversely, reinforcing materials, which may be of thin, light-weight construction, usually do not lend themselves to such measurements. Therefore, the information can be estimated by measuring the relaxed tensile stiffness of the material, also taking into account the relaxation of the material under stress with time. For preferred materials, the relaxed tensile stiffness, when properly measured, will be of approximately the same magnitude as the relaxed compressive stiffness. Accordingly, relaxed tensile stiffness values may be substituted for relaxed compressive stiffness values.

The contour curves referred to above may be derived by conventional mathematical means. Theoretical models for determining buckling characteristics are well known in the art. For example, A. D. Kerr has published, among others, a paper concerning vertical track buckling in High Speed Ground Transportation Journal, 7, 351 (1973). Loose-lay floor structures are similarly amenable to such theoretical studies. Accordingly, the potential energy, π, of a sheet flooring structure after buckling may be calculated from the following formula.

$$\pi = \frac{3C\theta^2}{L_o} + QL_o^2(1-E)\mathrm{Tan}\ \theta + KL_o[1-(1-E)\mathrm{Sec}\ \theta]^2 - KL_oE^2$$

where

C = bending resistance

θ = angle of lift-off of the buckle

Q = basis weight

K = relaxed compressive (or tensile) stiffness

$L_o$ = one half the length of the buckled area prior to application of the strain that caused the buckle

E = the compressive strain applied to creat the buckle

The bending resistance, C, may be calculated from the bending stiffness measured according to the Olsen Stiffness Test, using the following equation

$$C = \frac{M_wS}{b\phi}$$

where

$M_w$ = the measured bending stiffness

S = the span used in the test

b = the width of the test specimen

φ = the angle in radians at which the measurement was taken

The critical buckle strain may be calculated mathematically by applying the principle of minimum potential energy. Bending stiffness values, $M_w$, are converted to bending resistance values, C. Upon setting the derivatives of π with respect to θ, and of π with respect to $L_o$, equal to zero, assigning values for E and Q, and varying C and K within known limits, solutions can be obtained where E becomes the critical buckle strain. For example, this may be accomplished by using the Newton-Rathson Method of solving non-linear simultaneous equations. The solutions obtained by varying these bending resistance and relaxed compressive (tensile) stiffness values within known ranges yields tables of points of critical buckle strain. From these, one or more contour curves of constant critical buckle strain can be plotted for use as hereinafter described. As noted above, the contour curves illustrated herein are plotted in terms of bending stiffness, $M_w$, and relaxed compressive stiffness, K, rather than in terms of bending resistance, C, and K. The values of C used for calculation are converted from $M_w$ values. A flow chart for a computer program which may be used to generate this information is illustrated in Figs. 1A and 1B, which must be read together. Of course it will be appreciated that parameters which are ascertainable by reference to various curves may also be determined by purely mathematical means. The use of such mathematical means to derive the information required to practice the present invention is a matter of choice to the artisan. Accordingly, language in the specification and in the claims which refers to the plotting of curves and the like will also be deemed to include such mathematical alternatives.

In practicing the present invention, loose-lay flooring may be constructed for use over a particular subfloor having an ascertained or ascertainable subfloor dimensional change, or it can be constructed for use over subflooring having an expected subfloor dimensional change. As used herein, the expression "having an ascertainable (or ascertained) subfloor dimensional change" will be considered to encompass all of these alternatives. In any event, the objective will be to construct a loose-lay floor structure which has a critical buckle strain that is sufficient to accommodate the expected subfloor dimensional change. At one extreme are very stable subfloors, such as concrete, for which the subfloor dimensional change (and hence the critical buckle strain) would be minimal. At the other extreme are very unstable subfloors, such as particleboard for which the maximum subfloor dimensional change value (and hence the critical buckle strain) should be about 0.003.

Once the desired critical buckle strain of the flooring is known, an approximate basis weight for the flooring material can be selected. Any suitable resilient flooring material can be used, including polyvinyl chloride resin, acrylic resin, vinyl acetate resin, vinyl chloride-vinyl acetate copolymers, and the like. Furthermore, the flooring material may also comprise wear layers, decorative layers and the like. Structures comprising these materials usually have a basis weight of from about 2 to about 10 pounds per square yard (i.e., about 1 to about 5.5 kilograms per square meter), although lighter or heavier weights may be desired in certain circumstances. Since the basis weight is not critical when a loose-lay flooring is to be placed over a stable subfloor, basis weights for such usage will preferably vary from about 2 to about 5 pounds per square yard (i.e., from about 1 to about 2.7 kilograms per square meter), to conserve cost. Conversely, for unstable subfloors, basis weights of from about 5 to about 10 pounds per square yard (i.e., from about 2.7 to about 5.5 kilograms per square meter) will be preferred. Nevertheless, these values are provided merely as approximations and are not intended to limit the scope of the invention.

Next, using the selected basis weight, a contour curve of the desired critical buckle strain is plotted from data points obtained by varying the bending stiffness values over a range of from about 0 to about 9 inch-pounds (i.e., from about 0 to about 1 Newton-meter), and by varying the relaxed compressive stiffness values over a range of from about 0 to about 10,000 pounds per inch of width (i.e., from about 0 to about $1.75 \times 10^6$ Newtons per meter of width).

As previously noted, the bending stiffness of resilient flooring material is usually limited by practical considerations to be within the range of from about 0.1 to about 9 inch-pounds (i.e., from about 0.01 to about 1 Newton-meter). However, as the subfloor dimensional change increases, higher bending stiffness values will be preferred. Thus, over an unstable subfloor having a subfloor dimensional change of not less than 0.0015, where greater accommodation of subfloor movement is required from the floor structure, higher values such as from about 1 to about 9 inch-pounds (i.e., from about 0.1 to about 1 Newton-meter) are preferred. For subfloors having a subfloor dimensional change of 0.0025 or more, a bending stiffness of from about 2 to about 9 inch-pounds (i.e., from about 0.2 to about 1 Newton-meter) is preferred, and, for subfloors having a subfloor dimensional change of 0.0030 or more, a bending stiffness of about 3 to about 9 inch-pounds (i.e., from about 0.3 to about 1 Newton-meter) is preferred.

The actual relaxed compressive stiffness range which will be applicable to the floor structure will be discernible from the contour curve and, once this range is known, matrix materials and at least two layers of reinforcing materials can be selected such that the sum of the relaxed compressive (or tensile) stiffness values for these materials falls within the indicated range. The sum of these values also gives, from the curve, the target bending stiffness for the floor structure. Thus, the reinforcing material can be disposed within the matrix material such that the target bending stiffness is achieved.

The reinforcing material will comprise fibrous materials, many of which are conventionally used in the art. Examples of such materials are fibrous mats comprising glass, polyester, rayon, nylon and the like, or combinations thereof. Very lightweight materials on the order of 0.5 ounce per square yard (17 grams per square meter) are preferred. Reinforcing materials used in loose-lay flooring should have a relaxed compressive stiffness which is as uniform as possible in all directions. Woven materials tend to have directional strength depending on whether the material is compressed or stretched in a machine direction or across machine direction. Such directional strength variation is minimized with non-woven materials; therefore, non-woven materials are preferred.

Specialized reinforcing materials having unique characteristics may also be used. One such non-woven material is a glass mat comprising a binder which dissolves or softens in the presence of plasticizers found in typical matrix materials. Although the use of such material makes the prediction of relaxed compressive stiffness values much more difficult, there are also advantages. For example, reinforcing materials containing soluble binders are often heavier in nature and easier to handle in a production environment than materials which do not contain such binders. Thus, they may be used where handleability is a problem, but where it is also desirable to produce a floor structure having a reduced relaxed compressive stiffness.

In the usual situation, the majority of the relaxed compressive (tensile) stiffness of the total flooring will be provided by the reinforcing material. The matrix material, being a resilient plastic, is usually not dimensionally stable and in most situations will stretch or compress quite easily. The reinforcing material, however, does not readily compress or stretch. Preferably, the relaxed compressive stiffness of the reinforcing material will be at least about 5 times that of the matrix material and more preferably at least about 10 times that of the matrix material. Suitable flooring can be made with reinforcing material and matrix material having similar relaxed compressive stiffness values. However, the sum of the relaxed compressive stiffness values for the reinforcing materials should not be less than the sum of the relaxed compressive stiffness values for the matrix materials.

The bending stiffness of a loose-lay floor structure constructed according to the present invention will vary depending on how the reinforcing layers are disposed within the matrix material. In most instances it will be desirable to have the reinforcing material disposed within the matrix material in a substantially planar fashion. However, as set forth below, it may be preferable in certain circumstances to dispose the reinforcing material in a non-planar fashion. Preferably, two reinforcing layers will be used, although suitable loose-lay flooring can be produced using more than two reinforcing layers.

As a general rule, the greater the separation of the two layers, the greater the bending stiffness. Thus, if one reinforcing layer is disposed near the top surface of the matrix material and one is disposed near bottom surface, the bending stiffness will be greater than if both reinforcing layers are disposed near the neutral bending plane of the composite material.

Combinations of reinforcing materials may also be used. Rather than using two layers of the same reinforcing material in a matrix material, layers of different compositions may be used, e.g., a lighter reinforcing layer can be used in combination with a heavier reinforcing layer. The heavier reinforcing can be placed closer to the neutral bending plane, but it will still produce a bending stiffness comparable to that of a lighter weight reinforcing material disposed closer to the surface of the matrix material. Nevertheless when using heavier material, care must be taken not to exceed the desired relaxed compressive stiffness of the final product.

The use of such combinations can have great importance as, for example, where the surface of the matrix material is embossed, or where a wear layer is applied. If a lighter-weight reinforcement is placed near the surface of a matrix, embossing will tend to deform the reinforcement so that it is no longer planar, thus reducing its contribution to the relaxed compressive stiffness of the flooring structure. However, if a somewhat heavier reinforcement is used, that reinforcement could be disposed further away from the surface of the matrix, thereby diminishing the effects of the embossing. Similarly, if a wear layer with high compressive stiffness is to be applied, the neutral bending plane will be higher up in the composite structure than it would be when such a layer was not a component of the original matrix material. In such a situation, it might be necessary to place a lighter weight reinforcing material in the wear layer in order to achieve an adequate bending stiffness and relaxed compressive stiffness. Nevertheless, this problem may likewise be avoided by disposing a heavier reinforcing layer in the matrix material.

Other alternatives are also available to modify the characteristics of a flooring structure. For example, a reinforcing material has its greatest relaxed compressive/tensile stiffness when it is in a planar configuration. If the reinforcing layer is disposed in a matrix material in a non-planar fashion, or if it is modified such that a substantial portion of the reinforcing layer does not lie in the same plane, the relaxed compressive/tensile stiffness will be reduced. The former may be achieved by disposing the reinforcing within the matrix in a wavy or wrinkled manner; however, modification may be achieved in a variety of ways. For example, the reinforcing may be deformed from a planar configuration by embossing or other similar treatment.

Another means of reducing relaxed compressive/tensile stiffness of a reinforcing material is by modifying the material in a manner which does not affect planarity. For example, such modifications would include means such as perforating, cutting, punching holes, and the like, or by folding to break the fibers and then again flattening the reinforcing material. Accordingly, "modifications" as used herein in relation to the changing of relaxed compressive stiffness characteristics will be deemed to comprise all of the aforementioned possibilities and combinations thereof, as well as the use of reinforcing materials having dissolvable or softenable binders.

These modifications may be achieved as a matter of foresight or hindsight. Thus, a reinforcing material having too high a relaxed compressive stiffness value may be pretreated in such fashion that the relaxed compressive stiffness is reduced to a satisfactory value, after which it may be disposed within the matrix material. Alternatively, the flooring structure may be constructed and the relaxed compressive stiffness and/or the bending stiffness measured. Adjustments can then be made by modifying one or more of the reinforcing layers *in situ*. In this way, flooring structures which might not otherwise be suitable for use over a given subfloor may be treated so as to impart the necessary bending stiffness and/or relaxed compressive stiffness values.

This technique is also applicable to flooring structures comprising single reinforcing layers. A number of such structures have been described in the prior art. For example, U.K. Patent No. 1,525,018 discloses structures comprising glass reinforcing layers, the density of the glass being about 80 to about 160 grams per square meter. Similarly, U.K. Patent Application Nos. 2,012,618A, 2,018,618A and 2,019,253A refer to fibrous tissues having a density of about 10 to about 60 grams per square meter. Related structures comprising encapsulated glass are also described in U.S. Patent Nos. 4,242,380 and 3,980,511.

Furthermore, structures comprising nylon, polyester and other woven and non-woven materials are likewise known in the art.

When heavy gauge reinforcing is used to provide adequate dimensional stability, such structures can fail when placed over unstable subfloors. Applicants have discovered that *in situ* modification may be used to advantage on these structures. For example, flooring structures comprising a single layer of glass reinforcing were physically cut in various patterns, such as those illustrated in Figs. 12—14. Fig. 12 illustrates a pattern of square cuts which were deep enough to pierce the reinforcing layer, the structure otherwise being left intact. This pattern is referred to as a continuous modification pattern because there is still a continuum of reinforcing available within the flooring structure; e.g., longitudinally along lines A—A and transversely along lines B—B of Fig. 12. A modified continuous pattern is illustrated in Fig. 13, the linear nature of the continuum of reinforcing being substantially disrupted.

A different type of cutting pattern referred to as a discontinuous pattern is illustrated in Fig. 14. In this instance, the cutting is accomplished in both longitudinal and transverse directions so that no continuum of reinforcing remains. It is understood, however, that the patterns disclosed herein are provided merely by way of illustration, and that other geometric designs and patterns will also provide suitable results, and that combinations, for example, combinations of discontinuous patterns with continuous or modified continuous patterns are possible. The selection of a particular pattern may depend on artistic preferences, as well as on structural requirements. Accordingly, the design or pattern which is selected will be largely a matter of choice to the artisan.

*In situ* modifications may also be accomplished by embossing-type techniques in which the application of external forces disrupts the integrity of the reinforcing layer. All such techniques are included with the definition of "modifications" as hereinbefore described.

To practice the *in situ* modification invention on an existing structure comprising a single reinforcing layer, essentially the same sequence of events as described earlier for more complex structures should preferably be employed. First, the instability of an actual or proposed subfloor should be considered and a desired critical buckle strain should be selected for the end product whereby this critical buckle strain is greater than the subfloor dimensional change. The basis weight of the existing structure can then be measured and one or more curves of constant critical buckle strain can be generated by setting E equal to the desired critical buckle strain, Q equal to the basis weight and varying the bending stiffness, $M_w$, and the relaxed compressive stiffness, K, as hereinbefore described. The bending stiffness and the relaxed compressive stiffness of the existing structure can then be measured.

The measured relaxed compressive stiffness in most instances, and especially where the existing structure contains a very heavy reinforcing material, will not be relatable to the curve. However, the measured bending stiffness can be used in conjunction with the curve to determine the relaxed compressive stiffness which should be demonstrated by the desired end product. Thus, if the existing structure is modified *in situ* so that the resulting structure has a relaxed compressive stiffness which approximates that determined from the curve, the critical buckle strain of this resulting product should be such that the structure can be used over the intended subfloor. It has been found that, by applying such techniques to structures which have unsuitable buckling characteristics, structures are produced which have extremely good performance characteristics.

Although *in situ* modification causes substantial reductions of the relaxed compressive stiffness values, the bending stiffness values are relatively unaffected in most instances. Thus, the initially determined bending stiffness may be used to predict the required relaxed compressive stiffness from the curve. In those uncommon instances where the bending stiffness shows a significant change, the necessary relaxed compressive stiffness value may be determined from the curve using the bending stiffness value for the modified structure.

The present invention has the advantage of providing a relatively reliable way to predict the characteristics of loose-lay flooring structures, and it also provides guidelines by which the various parameters may be modified so as to predictably alter the characteristics of such structures.

The following examples will be illustrative to demonstrate, but not to limit, the advantages of the present invention.

## EXAMPLES

### Structures Comprising At Least Two Reinforcing Layers

#### Example 1

This example illustrates a process for designing a loose-lay flooring structure for use over a subfloor having a subfloor dimensional change of 0.001. The target critical buckle strain for the desired flooring structure is selected to be 0.0016 and the basis weight of the flooring structure is selected to be 4.6 pounds per square yard (2.5 kilograms per square meter). Accordingly, for purposes of calculation, E is assigned the value of the target critical buckle strain (0.0016) and Q is assigned the basis weight (4.6 pounds per square yard or 2.5 kilograms per square meter). By using the assigned values in the equations set forth in the specification, varying the bending resistance, C, such that the bending stiffness, $M_w$, is varied between 0 and 9 inch-pounds (0 and 1 Newton-meter), varying the relaxed compressive stiffness, K, from 0 to 10,000 pounds per inch of width (0 to about $1.75 \times 10^6$ Newtons per meter of width), and solving the resulting equations, a series of points of constant critical buckle strain corresponding to the varied values of $M_w$ and K are obtained (Fig. 2). From the curve, the relaxed compressive stiffness corresponding to the bending stiffness value of 0.1 inch-pound (0.01 Newton-meter) is 200 pounds per inch (35,000 Newtons per meter) of width (ppiow or Npmow) and that corresponding to 9 inch-pounds (1 Newton-meter) is 930 ppiow (163,000 Npmow).

A reinforcing material from International Paper Co., Identification No. IPO42081—2, is selected for evaluation. This material is a nonwoven mat comprised of 50% glass and 50% polyester fiber and having a weight of 0.524 ounce per square yard (18 grams per square meter). The relaxed tensile stiffness of this material is measured as follows: A sample 2 inches (5.08 cm) wide and 12 inches (30.48 cm) in length is cut and clamped in the jaws of an Instron Tensile Tester such that the jaws are separated by a distance of 8 inches (20.32 cm). The jaws are then moved apart at a rate of 0.02 inch (0.05 cm) per minute until the sample has elongated by 0.3%; i.e., the strain on the sample is 0.003. Jaw movement is stopped and the load on the sample is monitored for 90 minutes. The load decay curve is then extrapolated to 1,000 hours by means well known in the art, giving a relaxed tensile stiffness of 227 ppiow (39,750 Npmow).

A PVC plastisol matrix material is prepared having the following formula:

| Component | Parts by Weight |
|---|---|
| PVC Homopolymer resin (MWt=106,000)* | 100 |
| Primary plasticizer | 45 |
| Secondary plasticizer | 15 |
| Organotin stabilizer | 2 |
| Silica gel thickener | 1 |

*In this and other examples the molecular weights are weight average molecular weights

The relaxed tensile stiffness value measured using the Instron Tensile Tester is 74 ppiow (13,000 Npmow). Therefore, the ratio of the ppiow values for the two reinforcing layers to that of the matrix material is 454:74 or 6.1:1 (79,500:13,000 Npmow).

The sum of the relaxed compressive stiffness values for the two layers of reinforcing material and the matrix material is 528 ppiow (92,500 Npmow) and, from the curve, the bending stiffness corresponding to this ppiow value is 1.65 inch-pounds (0.186 Newton-meter). Accordingly, a floor structure having a basis weight of 4.6 pounds per square yard (2.5 kilograms per square meter) should have a critical buckle strain greater than 0.001 when constructed from the above materials such that the bending stiffness is 1.65 inch-pounds (0.186 Newton-meter) one reinforcing layer being disposed above the neutral bending plane of the resulting floor structure and the other reinforcing layer being disposed below said neutral bending plane.

To verify this, a floor structure is constructed for testing using a high velocity air impingement oven and a reverse roll coater. A layer of vinyl matrix material 0.01 inch (0.254 mm) thick is applied to a release carrier. A layer of the reinforcing material is laid on the matrix material and allowed to saturate, after which the composite material is gelled in an oven at 275°F. (135°C) for two minutes. After cooling, a second layer of matrix material 0.07 inch (1.18 mm) thick is applied to the surface of the gelled sample and this composite structure is gelled in the oven at 275°F. (135°C) for two minutes. A third layer of matrix material 0.01 inch (0.254 mm) thick is applied to the gelled substrate and a second layer of reinforcing material is placed in the wet plastisol and allowed to saturate. After saturation of the mat, the composite structure is gelled in an oven at 275°F. (135°C) for two minutes and then fused at 380°F. (193°C) for 2.5 minutes. After cooling, the fused composite structure is pressed between platens having a temperature of 320°F. (160°C) to consolidate the gauge to 0.08 inch (2.0 mm). Pressure is maintained for 30 seconds to give a material with a basis weight of 4.58 pounds per square yard (2.5 kilograms per square meter) and a bending stiffness, measured according to ANSI/ASTM D 747, of 1.65 inch-pounds (0.186 Newton-meter).

To verify its suitability, a sample is placed in an environmental test chamber on a piece of particleboard having a subfloor dimensional change of 0.001. The particleboard is at its maximum expanded position and the sample is affixed thereto such that, when the sample-on-subfloor combination is subjected to a simulated, 1,000-hour summer-winter seasonal change, the floor sample is subjected to the strain imposed by the movement of the subfloor. The ability of the floor structure to accommodate the imposed strain without buckling demonstrates that it has a critical buckle strain in excess of 0.001. Verification may also be achieved by using the measured basis weight, bending stiffness, and relaxed compressive stiffness values of the resulting floor structure and then calculating the critical buckle strain mathematically.

Example 2

This example illustrates the construction of a flooring structure whereby an intermediate test structure is employed.

A foamable polyvinyl chloride plastisol matrix material having the following composition and a viscosity of 10,000 cps (mPa.S) is prepared by means well known in the art.

| Ingredient | Parts by Weight |
|---|---|
| Dispersion Grade PVC Homopolymer Resin, MWt, 105,000 | 36.00 |
| Dispersion Grade PVC Homopolymer Resin, MWt 80,400 | 36.00 |
| Blending Grade PVC Homopolymer Resin MWt 81,100 | 28.00 |
| Epoxy-type plasticizer | 1.00 |
| Dioctyl phthalate | 50.00 |
| Blowing agent activator | 0.20 |
| Stabilizer | 0.15 |
| Azodicarbonamide blowing agent | 0.66 |
| Feldspar filler | 18.00 |

The following structure is prepared for use over a subfloor having an expected subfloor dimensional change of 0.0015. The target critical buckle strain for this floor structure is selected to be 0.0018.

The expected subfloor dimensional change of 0.0015 indicates that the subfloor is of medium stability. Therefore, a basis weight of 4.1 pounds per square yard (2.2 kilograms per square meter) is selected for the sample. Using these data, a contour plot is prepared as set forth in Example 1 wherein E is 0.0018, Q is 4.1 pounds per square yard (2.2 kilograms per square meter), and $M_w$ and K are varied between 0 and 9 inch-pounds (0 and 1 Newton-meter) and 0 and 10,000 ppiow (0 and $1.75 \times 10^6$ Npmow), respectively. From the plot obtained (FIG. 3), the range of relaxed compressive stiffness values corresponding to bending stiffness values of 0.1 and 9 inch-pounds (0.01 and 1 Newton-meter) is determined to be 150 to 750 pounds per inch of width (26,300 to 131,000 Npmow).

A 50% glass fiber/50% polyester fiber reinforcing material having a basis weight of 0.524 ounce per square yard (18 grams per square meter) is selected, as is the matrix material described above. The relaxed tensile stiffness value for the foamed matrix is 42 pounds per inch of width (7400 Npmow) whereas the value for the reinforcing material is 227 pounds per inch of width (39,800 Npmow). Accordingly, because two reinforcing layers are used, the total of the relaxed tensile stiffness values is calculated to be 496 pounds per inch of width (87,000 Npmow), as follows:

| | Relaxed Tensile Stiffness | |
|---|---|---|
| Component | (ppiow) | (Npmow) |
| Matrix material | 42 | 7,400 |
| First reinforcing layer ($R_1$) | 227 | 39,800 |
| Second reinforcing layer ($R_2$) | 227 | 39,800 |
| | 496 | 87,000 |

This value is within the range of 150 to 750 pounds per inch of width (26,300 to 131,000 Npmow) determined from the curve. Furthermore, the sum of 454 pounds per inch of width (79,600 Npmow) for the two reinforcements is approximately 10 times greater than the value of 42 ppiow (7,400 Npmow) measured for the matrix material, which is a desirable relationship.

The actual relaxed compressive stiffness of the composite structure is determined experimentally by constructing a test structure according to the following procedure. A layer of matrix material 0.027 inch (0.69 mm) thick is coated on a release carrier and one layer of the reinforcing material is placed in an approximately planar fashion on top of the wet surface. The reinforcing layer is allowed to saturate and the material is gelled at 280°F (138°C) for 1.5 minutes. After cooling, a second layer of plastisol matrix material essentially comprising the central portion of the eventual composite structure is coated at a thickness of 0.029 inch (0.74 mm) on the gelled substrate. A second layer of reinforcing material is placed in the wet plastisol and allowed to saturate, after which the material is gelled at 280°F (138°C) for 1.5 minutes. After the composite has cooled, a third coating of plastisol 0.02 inch (0.5 mm) thick is placed on the gelled surface. This composite is gelled at 280°F. (138°C) for 1.5 minutes to give a structure having a thickness of 0.076 inch (1.93 mm). When fused at 420°F (216°C), the blowing agent is activated and the structure is expanded to a final thickness of 0.117 inch (2.97 mm). This structure is illustrated in FIG. 4 in which $R_1$ and $R_2$ are the reinforciong layers and $S_1$ and $S_2$ are the lower and upper surfaces, respectively. The relaxed compressive stiffness value of this structure is measured to be 538 pounds per inch of width (94,200 Npmow) as compared to the predicted relaxed tensile stiffness value of 496 pounds per inch of width (87,000 Npmow).

Referring again to FIG. 3, the relaxed compressive stiffness value of 538 pounds per inch of width (94,200 Npmow) indicates that the bending stiffness of the finally constructed sample should be 3.3 inch-pounds (0.37 Newton-meter). However, the bending stiffness of the test structure is measured to be 0.81 inch-pounds (0.092 Newton-meter). This value is substantially below the desired value; therefore, a second composite is constructed. In this sample, represented by FIG. 5, the reinforcing layers are separated by a greater distance in order to increase the bending stiffness.

The procedure followed is essentially the same as that set forth above. A layer of matrix material is coated to a thickness of 0.01 inch (0.25 mm) on a release carrier and one layer of reinforcing material, $R_1$, is placed in an approximately planar fashion on top of the coated surface. When saturation is complete, the material is gelled at 280°F (138°C) for 1 minute. After cooling, a layer of matrix material 0.050 inch (1.27 mm) thick is coated on the gelled material and gelled by heating at 280°F (138°C) for 2 minutes. A third coating of plastisol 0.015 inch (0.38 mm) thick is then placed on the gelled surface and a second layer of reinforcing material, $R_2$, is placed in the wet plastisol. After saturation is complete, the material is gelled to give a composite structure having a thickness of 0.075 inch (1.91 mm). The resulting structure is then fused at 420°F (216°C) to activate the blowing agent and expand the final structure to a thickness between $S_1$ and $S_2$ of 0.117 inch (2.97 mm). The bending stiffness of this structure is measured to be 3.29 inch-pounds (0.372 Newton-meter).

As noted above, this structure is intended for use over the subfloor having an expected subfloor dimensional change of 0.0015. To verify its suitability, a sample is placed on such a subfloor at its maximum expanded position and affixed to it. When the floor sample-on-subfloor combination is subjected to a simulated, 1000-hour, summer-winter seasonal change as set forth in Example 1, no buckling occurs, thus indicating that it has a critical buckle strain of greater than 0.0015.

The structural stability of this floor structure is determined by measuring the length of a sample, heating it at 180°F (82°C) for six hours, reconditioning it at 73.4°F (23°C) and 50% relative humidity for one hour, and then remeasuring the length. The percent change in length (the structure stability) is found to be −0.02%. This is a desirable value which indicates that the floor structure is dimensionally stable.

## Example 3

The following additional structures are prepared to illustrate the variations in bending stiffness caused by changing the position of the reinforcing materials within the matrix. The structure of FIG. 6 is prepared in a single step process essentially as described in Example 2 except that a single layer of plastisol 0.075 inch (1.91 mm) thick is placed on the release carrier. Upon expansion, a thickness of 0.118 inch (3.0 mm) between surfaces $S_1$ and $S_2$ is obtained, and a bending stiffness of 0.20 inch-pounds (0.023 Newton-meter) is measured for this structure.

A structure similar to that of FIG. 5 is prepared except that a Manville glass fiber mat having a basis weight of 20 grams per square meter (*ca.* 0.6 ounce per square yard) is employed for $R_1$ and $R_2$. When expanded to a thickness of 0.118 inch (3.0 mm), the structure has a bending stiffness of 5.66 inch-pounds (0.64 Newton-meter).

The structure of FIG. 7 is prepared in the manner used to prepare the structure of FIG. 5 (Example 2), except that the material is not heated to expand the plastisol. The resulting unfoamed matrix has a thickness of 0.077 inch (1.96 mm) and the separation between $R_1$ and $R_2$ is 0.054 inch (1.37 mm). The bending stiffness of this structure is 1.49 inch-pounds (0.168 Newton-meter) which is substantially less than the value of 3.29 inch-pounds (0.372 Newton-meter) obtained for the structure of FIG. 5.

When the results obtained for these structures are compared, several generalities can be made. First, extremely low bending stiffness values are obtained in the absence of the two reinforcing layers. Secondly, comparing FIGS. 4 and 5, bending stiffness is increased when the distance between the reinforcing layers $R_1$ and $R_2$ is increased. The same result is also obtained when a relatively lighter weight reinforcing material is replaced by a heavier material. Finally, referring to FIGS. 5 and 7, bending stiffness may also be varied by controlling the amount of expansion of the matrix material.

## Example 4

A structure similar to that of FIG. 5 of Example 2 is prepared, the difference being that a clear PVC plastisol wear layer, W, is added to the surface of the structure. This structure is illustrated in FIG. 8 and is also designed for use over a subfloor having a subfloor dimensional change of 0.0015; therefore, a target critical buckle strain of 0.0018 is also chosen 25 for this sample. The basis weight for the sample, due to the increase in weight attributable to the wear layer, is 4.7 pounds per square yard (2.6 kilograms per square meter).

The contour curve generated for these parameters as set forth in Example 1 is illustrated in FIG. 9. From this curve, it is seen that a range of relaxed compressive stiffness values of 160 to 790 ppiow (28,000 to 138,400 Npmow) is possible over a bending stiffness range of 0.1 to 9 inch-pounds (0.01 to 1 Newton-meter). Using the relaxed tensile stiffness value of 227 ppiow (39,800 Npmow) for the reinforcing layer, 42 ppiow (7,400 Npmow) for the matrix material and a measured value of 10 ppiow (1751 Npmow) for the 0.01-inch (0.25-mm) thick wear layer, the sum of the relaxed tensile stiffness values for the proposed structure is predicted to be 506 pounds per inch of width (88,800 Npmow).

A test structure is constructed essentially as set forth in Example 2, except that the wear layer is included. The 1,000-hour relaxed compressive stiffness value for this structure is 572 pounds per inch of width (100,200 Npmow). The curve of FIG 9 indicates that the bending stiffness value corresponding to this relaxed compressive stiffness value is 3.4 inch-pounds (0.38 Newton-meter). This value is comparable to that obtained for the structure illustrated by FIG. 5; therefore, the structure of FIG. 8 is prepared in which reinforcing layer $R_1$ is disposed approximately 0.01 inch (0.25 mm) above surface $S_1$ and reinforcing layer $R_2$ is disposed 0.01 inch (0.25mm) below surface $S_2$. The bending stiffness for this structure is shown to be 3.40 inch-pounds (0.384 Newton-meter). When this structure is tested as described in Example 1, no buckling occurs, indicating that it is suitable for use over a subfloor having a subfloor dimensional change of 0.0015. Furthermore, the structural stability, measured as set forth in Example 2, is −0.06%, indicating that the structure is dimensionally stable.

## Example 5

A sample identical to that prepared in Example 4 is constructed except that the side containing the wear layer is mechanically embossed to a depth of 0.005 inch (0.13 mm). The relaxed compressive stiffness measured for this structure is 546 pounds per inch of width (95,600 Npmow) as compared to 572 pounds per inch of width (100,200 Npmow) for the unembossed structure. No buckling occurs when this structure is tested in the usual manner, thus indicating that it is also suitable for use over a subfloor having an expected subfloor dimensional change of 0.0015. The structural stability, determined as previously described, is −0.04%.

## Example 6

This example illustrates the use of reinforcing materials having a dissolvable binder whereby the character of the reinforcing material changes *in situ*.

A flooring structure for use over a subfloor having a subfloor dimensional change of 0.002 is desired. Accordingly, a target critical buckle strain of 0.0026 is selected, as is a basis weight for the flooring structure of 6.0 pounds per square yard (3.3 kilograms per square meter). Using these values for E and Q, respectively, and varying the relaxed compressive stiffness K between 0 and 10,000 ppiow (0 and $1.79 \times 10^6$ Npmow) and the bending stiffness $M_w$ between 0 and 9 inch-pounds (0 and 1 Newton-meter), a contour curve is constructed as previously set forth. From the curve (not shown), the range of applicable relaxed compressive stiffness values is seen to be 135 to 600 ppiow (23,600 to 105,100 Npmow). The matrix material used in Example 2, but containing in addition 34 parts by weight of butyl benzyl phthalate plastisizer, and having a relaxed tensile stiffness of 30 pounds per inch of width (5,300 Npmow) is selected for use with reinforcing material SAF 50/2 obtained from Manville Corporation. The reinforcing material has a measured relaxed tensile stiffness of 352 ppiow (61,600 Npmow); thus, the expected relaxed compressive stiffness of a structure comprising two such reinforcing layers and the indicated matrix material should be 734 ppiow (128,500 Npmow). It is known, however, that the reinforcing material will lose a portion of its stiffness contribution when placed in a vinyl matrix, apparently due to softening of the reinforciong material's binder in the presence of the plastisizer present in the plastisol.

A test structure comprising two layers of reinforcing material in the matrix material is constructed as follows: A layer of the plastisol described above, containing butyl benzyl phthalate to facilitate softening of the binder, is coated on a chrome steel plate at a thickness of 0.015 inch (0.38 mm) and one layer of SAF 50/2 reinforcing material is placed in the wet plastisol. When the reinforcement is saturated, the material is gelled at 400°F (205°C) for one minute and cooled. Thereafter, a layer of plastisol approximately 0.045 inch thick (1.14 mm) is placed on the gelled material and gelled by heating at 400°F (205°C) for 1.5 minutes. A third layer of plastisol 0.015 inch (0.38 mm) thick is applied to the gelled surface and a second layer of SAF 50/2 reinforcement is placed in the wet plastisol and allowed to saturate. The sample is then heated at 420°F (216°C) for 3.5 minutes to fuse the product. The resulting structure has a thickness of 0.130 inch (3.3 mm) and a measured basis weight of 6.0 pounds per square yard (3.3 kilograms per square meter). The relaxed compressive stiffness value for this structure is measured to be 567 pounds per inch of width (99,300 Npmow), which is significantly lower than the sum estimated above for this structure. From the curve, the bending stiffness corresponding to the relaxed compressive stiffness value of 567 pounds per inch of width (99,297 Npmow) is 7.5 inch-pounds (0.85 Newton-meter). The measured bending stiffness for the structure is determined to be 7.47 inch-pounds (0.844 Newton-meter).

The above values are within the expected range of values. Accordingly, a sample is subjected to a 1,000-hour summer-winter heating season test, as previously illustrated, in order to determine its suitability. No bucking is observed; therefore, the sample is suitable for use over a subfloor having a subfloor dimensional change of 0.002. The structural stability is determined to be +0.06%.

Example 7

This example illustrates that reinforcing material disposed within a flooring structure may be modified by external means such that the relaxed compressive stiffness of the reinforcing material and hence the relaxed compressive stiffness and the bending stiffness of the flooring structure are reduced.

A flooring structure is desired for use over a subfloor having a subfloor dimensional change of 0.001; therefore, a target critical buckle strain of 0.0015 is selected, as is a basis weight of 3.0 pounds per square yard (1.6 kilograms per square meter). A contour curve is plotted in the usual manner and, from the curve (FIG. 10), the range of applicable relaxed compressive stiffness values is found to be 155 to 770 ppiow (27,100 to 134,800 Npmow.

The following materials are selected to construct the flooring structure.

| | Relaxed Tensile Stiffness | | Basis Weight | |
|---|---|---|---|---|
| Component | ppiow | Npmow | lbs/sq.yd. | $kg/m^2$ |
| Manville Reinforcement SH-20/1 | 512 | 89,700 | 0.04 | 0.022 |
| Manville Reinforcement SH-50/10 | 761 | 133,300 | 0.11 | 0.060 |
| PVC Plastisol | 30 | 5,300 | 2.85 | 1.55 |

Using these materials, a flooring structure is constructed with the heavier reinforcement near the backing. A coating of plastisol 0.015 inch (0.38 mm) is placed on a suitable release carrier and a layer of SH-50/10 reinforcement is placed on the plastisol and allowed to saturate. After saturation of this reinforcement, the material is gelled for one minute at 280°F (138°C). On the gelled substrate is placed a second coating of the same plastisol composition at a thickness of 0.032 inch (0.81 mm). A layer of SH-20/1 reinforcement is placed on the top surface of the plastisol, allowed to saturate, and then fused at 425°F (218°C) to expand the structure to a final thickness of 0.115 inch (2.92 mm). Upon cooling and separating the structure from the release carrier, a basis weight of 3.0 pounds per square yard (1.63 kilograms per square meter), is obtained. The structure demonstrates a relaxed compressive stiffness of 1303 pounds per inch of width (228,200 Npmow) and a bending stiffness of 5.50 inch-pounds (0.621 Newton-meter). From the above cited range, it is obvious that the relaxed compressive stiffness of 1303 piow (228,200 Npmow) is too high, and that this structure will not exhibit the target critical buckle strain.

To reduce the relaxed compressive stiffness of this flooring structure, a sample is inverted and placed in a press such that the surface adjacent the SH-50/10 reinforcement is on top. Over this structure is placed a section of plastic material having a prismatic textured face with a pattern depth of approximately 0.05 inch (1.27 mm). Pressure is applied to the flooring structure and the plastic such that the prismatic surface is pressed into the flooring structure to the depth of the prism pattern, thereby disrupting the character of the SH-50/10 reinforcing layer. The relaxed compressive stiffness of the modified sample of flooring structure is 547 pounds per inch of width (95,800 Npmow) and the bending stiffness is 3.21 inch-pounds (0.363 Newton-meter). The critical buckle strain for this structure is seen to be 0.0015 from the curve, thus indicating that it is suitable for use over a subfloor having a subfloor dimensional change of 0.001. Furthermore, the structural stability is determined to be −0.06%, indicating that the structure is dimensionally stable.

Example 8

This example illustrates the construction of a flooring structure comprising a wear layer, a decorative layer, a foamed plastisol, and reinforcing materials.

A particleboard subflooring having a subfloor dimensional change of 0.0025 is selected for use. Therefore, a target critical buckle strain of 0.0036 is selected for the flooring structure, as is a basis weight of 6.9 pounds per square yard (3.7 kilograms per square meter). A contour curve is constructed in the usual manner and, from the curve (FIG. 11), the applicable compressive stiffness range is seen to be 90 to 420 ppiow (15,800 to 73,600 Npmow).

The following components are used to construct this flooring structure.

| Component | Relaxed Tensile Stiffness ppiow | Basis Weight lbs/sq. yd. | Component Thickness inch |
|---|---|---|---|
| PVC wear layer | 10 | 0.56 | 0.01 |
| Decorative layer | 36 | 3.27 | 0.052 |
| PVC foam layer | 35 | 3.00 | 0.10 |
| International Paper Reinforcement IP042081-2 | 227 | 0.03275 | 0.007 |

The metric equivalents are as follows:

| | Npmow | $Kg/m^2$ | mm |
|---|---|---|---|
| PVC wear layer | 1800 | 0.3 | 0.25 |
| Decorative layer | 6300 | 1.77 | 1.32 |
| PVC foam layer | 6100 | 1.63 | 2.54 |
| International Paper Reinforcement IP042081-2 | 39,800 | 0.018 | 0.178 |

The foamable plastisol composition of Example 2 is coated on a release carrier at a thickness of 0.01 inch (0.25 mm) and the non-woven reinforcing layer from Example 1 is placed on the surface of the plastisol and allowed to saturate. The material is then gelled at 280°F (138°C) for one minute and cooled to room temperature. A second layer of plastisol 0.035 inch (0.89 mm) thick is applied to the surface of the gelled layer, heated at 425°F (218°C) to expand the foamable plastisol to a thickness of 0.10 inch (2.54 mm) and cooled to room temperature. The basis weight of this composite material is 3.0 pounds per square yard (1.63 kilograms per square meter.)

Onto the cool structure is placed a coating of a urethane adhesive composition 0.002 inch (0.05 mm) thick and the coating is then heated at 250°F (121°C) to evaporate the solvent. The urethane adhesive comprises 10% by weight urethane block copolymer, 88% by weight methyl ethyl ketone and 2% by weight silica gel thickener.

A decorative binder/chip layer is prepared by dicing a filled PVC composition into fine particles and mixing the resulting chips with a binder composition to form a particulate material suitable for deposition using a stencil. The chip composition is as follows:

| Component | Parts by Weight |
|---|---|
| Extrusion grade PVC homopolymer | 100 |
| Primary phthalate plasticizer | 32.5 |
| Epoxy-type plasticizer | 7.5 |
| Zinc stearate | 0.7 |
| Limestone filler | 328 |

The binder/chip composition is prepared by blending 1,225 parts by weight of the chip composition with 250 parts of solution-polymerized PVC resin, 123 parts primary plasticizer, 79.5 parts epoxy-type plasticizer and 4.5 parts of stabilizer. Mixing is accomplished using a Hobart Mixer with a wire whip attachment, the mixing time being approximately five minutes.

The previously prepared 0.10-inch (2.54-mm) thick foam sample on release carrier is perforated with a pin roll which punches holes through the entire structure at a spacing of approximately 1/8 inch (3 mm). The decorative binder/chip composition is stenciled onto the perforated foam surface forming a layer of approximately 0.085 inch (2.16 mm) thick, the basis weight of this layer being 3.27 pounds per square yard (1.77 kilograms per square meter). A second reinforcing layer identical to that used above is placed on the surface of the stenciled layer and the preformed PVC wear layer on a release carrier comprising an adhesive is placed on the chip layer such that the adhesive layer is in contact with the upper reinforcing layer. The entire structure is placed in a flat press with the upper platen heated to 295°F (146°C) and the lower platen being water cooled. The press is closed, exerting a minimum pressure for eight seconds in order to consolidate the decorative stenciled layer from a thickness of 0.085 inch (2.16 mm) to a thickness of 0.052 inch (1.32 mm). The press is then opened and an embossing plate preheated to 275°F (135°C) is inserted into the press. The press is closed for eight seconds, applying sufficient pressure to cause embossing of the structure to a depth of 0.016 inch (0.41 mm). The composite sample is then removed from the press and cooled to room temperature, after which the top and bottom carrier layers are removed.

The relaxed compressive stiffness of this composite structure is measured to be 358 pounds per inch of width (62,700 Npmow). For this measured value a bending stiffness of 5.5 (0.62 Newton-meter) is seen to be necessary by reference to the contour curve. The value measure for this structure is found to be 5.50 inch pounds (0.621 Newton-meter); thus, no modification of the structure is required.

To evaluate the sample it is placed in an environmental test chamber for 1,000 hours where it is subjected to a summer-winter environmental change as described above. No buckling is observed; therefore, the test result indicates that the structure is suitable for use over a subfloor having a subfloor dimensional change of 0.0025.

Structures Comprising a Single Reinforcing Layer

The following examples illustrate modification techniques by which singly reinforced flooring structures may be modified *in situ*.

A foam structure comprising a single reinforcing layer and having a total thickness of 0.096 inch (2.44 mm) is prepared using the foamable plastisol described in Example 2. A layer of plastisol approximately 15 mils (0.38 mm) thick is applied to a release carrier and a non-woven glass fiber mat having a basis weight of 35 grams per square meter (Identification No. SH 35/6 from Manville Corporation) is embedded in the wet plastisol. The plastisol containing the embedded glass mat is then gelled at 280°F (138°C) for one minute. Upon cooling, a layer of plastisol 32 mils (0.81 mm) thick is placed on the gelled surface and the composite structure is fused at 430°F (221°C) for 2.5 minutes. The resulting structure has a basis weight of 2.8 pounds per square yard (1.5 kilograms per square meter). The bending stiffness is measured to be 0.330 inch-pounds (0.0373 Newton-meter) and the relaxed compressive stiffness is measured to be 1074 ppiow (188,100 (Npmow), both measurements being made as hereinbefore described.

To illustrate the applicability of this process, a curve is generated by arbitrarily selecting a subfloor dimensional change of 0.0013 and then selecting a target critical buckle strain of 0.0015. By assigning E the value 0.0015 and Q the value of 2.8 pounds per square yard (1.5 kilograms per square meter), and then varying the bending stiffness, $M_w$, between 0 and 9 inch-pounds (0 and 1 Newton-meter) while varying the relaxed compressive stiffness, K, between 0 and 10,000 ppiow (0 and 1.75 x $10^6$ Npmow), a curve of constant critical buckle strain is generated (FIG. 15). From the curve, it is seen that for a structure having a bending stiffness of 0.330 inch-pounds (0.0373 Newton-meter), a relaxed compressive stiffness of 245 ppiow (42,900 Npmow) would be required. Thus, if the measured relaxed compressive stiffness values are greater than 245 ppiow (42,900 Npmow), the modified structures would not meet the target critical buckle strains whereas, if the measured relaxed compressive stiffness values are equal to or less than this figure, acceptable critical buckle strain values would be obtained.

The utility of this approach may be seen from Examples 9—13 in which the above control sample is modified in various ways. A comparison of the modified ppiow (Npmow) values indicates whether the modification would be sufficient to give a product with a suitable critical buckle strain.

Example 9

This example illustrates a series of *in situ* modifications performed in a continuous pattern according to the design illustrated in FIG. 12. In all instances, the squares are cut in the indicated dimensions and the mortar line (the distance between the cut squares) is formed in the indicated dimension. The column entitled Square Area indicates the percentage of the total area which has been isolated from the continuum of reinforcing by cutting. The measured bending stiffness values and relaxed compressive stiffness values are indicated for each modification. The acceptability of each modification to provide a suitable critical buckle strain is also indicated. It is noted that regardless of the severity of the modification, the bending stiffness values tend to vary only slightly from the originally measured value. This is true in virtually all instances and indicates that the target relaxed compressive stiffness value which is originally estimated from the curve using the measured bending stiffness value will also remain essentially the same.

| Sample No. | Dimension of Square inch | Dimension of Square mm | Dimension of Mortar inch | Dimension of Mortar mm | Square Area % | Measured Relaxed Compressive Stiffness ppiow | Measured Relaxed Compressive Stiffness Npmow | Acceptable Modification y = yes n = no | Measured Bending Stiffness In.-Lbs. | Measured Bending Stiffness N.m |
|---|---|---|---|---|---|---|---|---|---|---|
| A | 1/2 | 12.7 | 1/2 | 12.7 | 25 | 569 | 99,600 | n | .301 | 0.0340 |
| B | | | 1/4 | 6.4 | 45 | 401 | 70,200 | n | .303 | 0.0342 |
| C | | | 1/8 | 3.2 | 64 | 168 | 29,400 | y | .288 | 0.0325 |
| D | | | 1/16 | 1.6 | 81 | 117 | 20,500 | y | .272 | 0.0307 |
| E | 3/4 | 19.1 | 3/4 | 19.1 | 27.5 | 579 | 101,400 | n | .324 | 0.0366 |
| F | | | 1/2 | 12.7 | 36 | 511 | 89,500 | n | .348 | 0.0393 |
| G | | | 1/4 | 6.4 | 56 | 295 | 51,700 | n | .329 | 0.0372 |
| H | | | 1/8 | 3.2 | 74 | 202 | 35,400 | y | .313 | 0.0354 |
| I | 1 | 25.4 | 1 | 25.4 | 25 | 540 | 94,600 | n | .342 | 0.0386 |
| J | | | 3/4 | 19.1 | 36 | 545 | 95,400 | n | .322 | 0.0388 |
| K | | | 1/2 | 12.7 | 49 | 378 | 66,200 | n | .327 | 0.0364 |
| L | | | 1/4 | 6.4 | 64 | 312 | 54,600 | n | .327 | 0.0370 |
| M | | | 1/8 | 3.2 | 81 | 200 | 35,000 | y | .313 | 0.0354 |

Example 10

This example illustrates a series of discontinuous pattern examples cut as illustrated in FIG. 14.

| Sample No. | Distance Separating Lines of Cutting inch | mm | Measured Relaxed Compresssive Stiffness ppiow | Npmow | Acceptable Modification y = yes n = no | Bending Stiffness In.-Lbs. | N.m |
|---|---|---|---|---|---|---|---|
| A | 1/4 | 6.4 | 64 | 11,200 | y | .298 | 0.0337 |
| B | 1/2 | 12.7 | 153 | 26,800 | y | .326 | 0.0368 |
| C | 3/4 | 19.1 | 202 | 35,400 | y | .318 | 0.0359 |
| D | 1 | 25.4 | 202 | 35,400 | y | .330 | 0.0373 |

Example 11

This example illustrates the mechanical punching of a sample to internally disrupt the reinforcing layer. A wire grid consisting of wire having a diameter of 0.025 inch (0.64 mm), the wires being disposed 1/2 inch (12.7 mm) apart, is pressed into the sample using a flat press and sufficient pressure to cause disruption of the reinforcing layer. Disruption is verified by taking a portion of the sample and dissolving the plastic material in tetrahydrofuran. Although the reinforcing layer is not completely separated into square elements, only a few fibers remain to connect the elements together. The relaxed compressive stiffness is 214 pounds per inch of width (35,500 Npmow). These results indicate that the sample is not as significantly modified as a hand cut example (such as Example 10), but it is modified sufficiently to be acceptable.

Example 12

This example illustrates external mechanical modification using the prismatic surface described in Example 7. This surface is pressed into the sample to a depth of about 0.030 inch (0.76 mm) and a piece of the sample is dissolved in tetrahydrofuran to remove the polymeric material. Examination of the remaining glass fabric shows that it has been deformed or dented, but not cut, by the external modification. The relaxed compressive stiffness is found to be 524 ppiow (91,800 Npmow) which indicates that the sample will now have a suitable critical buckle strain. When compared to the unmodified control structure, a drop in the relaxed compressive stiffness of the sample of about 50% is noted. This illustrates how samples may be internally modified by compression without causing actual separation of the reinforcing layers. This observation has significance because it indicates that encapsulated glass structures may be physically modified *in situ* without adversely affecting the structural integrity of a product.

Example 13

This example illustrates a modified continuous pattern prepared according to the design illustrated in FIG. 13. The pattern is symmetrical and distances C—C, D—D and E—E are all 1/4 inch (6.4 mm). The relaxed compressive stiffness measured for this structure is 287 ppiow (50,300 Npmow), indicating that its critical buckle strain has been dramatically improved, although it has not been improved enough for this structure to meet the target critical buckle strain of 0.0015. Nevertheless, this result is quite favorable, especially when compared to the results obtained for structures which have been modified by other means.

As an example, the isolated square area of this sample is 41%. The isolated square area of a sample cut according to example 9B is 45%, yet the relaxed compressive stiffness values are 401 ppiow (70,200 Npmow) for that sample and 287 ppiow (50,300 Npmow) for the present sample. Thus, in this instance, the modified continuous pattern is superior.

METRIC CONVERSION TABLES FOR FIGS. 2,3,9,10,11,15

| Bending Stiffness ($M_w$) | | Relaxed Compressive Stiffness (K) | |
|---|---|---|---|
| In.-Lbs. | N-m | ppiow | Npmow |
| 1 | 0.1130 | 200 | 35,025 |
| 2 | 0.2260 | 400 | 70,051 |
| 3 | 0.3390 | 600 | 105,076 |
| 4 | 0.4519 | 800 | 140,101 |
| 5 | 0.5649 | 1000 | 175,127 |
| 6 | 0.6779 | | |
| 7 | 0.7909 | | |
| 8 | 0.9039 | | |
| 9 | 1.0169 | | |

Selected Basis Weights (Q)

| FIG. | Lbs./Yd.$^2$ | Kg/m$^2$ |
|---|---|---|
| 2 | 4.6 | 2.5 |
| 3 | 4.1 | 2.2 |
| 9 | 4.7 | 2.6 |
| 10 | 3.0 | 1.63 |
| 11 | 6.9 | 3.74 |
| 15 | 2.8 | 1.52 |

**Claims**

1. A process for making a resilient loose-lay floor structure for use over a subfloor having an ascertainable subfloor dimensional change, said process comprising the steps of

selecting a target critical buckle strain for said floor structure, said critical buckle strain being greater than the subfloor dimensional change,

selecting an approximate basis weight for said floor structure, said basis weight being within the range of from about 2 to about 10 pounds per square yard (about 1 to about 5.5 kilograms per square meter),

plotting a contour curve of the selected critical buckle strain for said selected basis weight by varying the bending stiffness values from about 0 to about 9 inch-pounds (about 0 to about 1 Newton-meter) and by varying the relaxed compressive stiffness values from about 0 to about 10,000 pounds per inch of width (about 0 to about $1.75 \times 10^6$ Newtons per meter of width),

determining from said contour curve the range defined by the minimum and maximum relaxed compressive stiffness values corresponding to bending stiffness values of about 0.1 and about 9 inch-pounds (about 0.01 and about 1 Newton-meter), respectively.

selecting a matrix material and at least two layers of reinforcing material such that the sum of the relaxed compressive stiffness values for said materials falls within the determined range, said matrix material and said reinforcing materials being selected such that the sum of the relaxed compressive stiffness values for said reinforcing materials is not less than the sum of the relaxed compressive stiffness values for said matrix material,

determining from said contour curve the bending stiffness value applicable to the sum of the relaxed compressive stiffness values for said reinforciong materials and said matrix material, and

disposing said layers of reinforcing material within said matrix material such that the measured bending stiffness of the resultant floor structure corresponds to the determined bending stiffness, at least one reinforcing layer being approximately above the neutral bending plane of said resultant floor structure and at least one reinforcing layer being approximately below said neutral bending plane, the critical buckle strain for said resultant floor structure being approximately equivalent to the target critical buckle strain and greater than the strain expected to be caused by the subfloor dimensional change.

2. The process as set forth in claim 1 hereof wherein said minimum relaxed compressive stiffness value determined from said contour curve corresponds to a minimum bending stiffness value of 1 inch-pound (0.1 Newton-meter), said floor structure being intended for use over a subfloor having a subfloor dimensional change of not less than 0.0015.

3. The process as set forth in claim 2 hereof wherein said minimum bending stiffness value is 3 inch-pounds (0.3 Newton-meter) and said subfloor dimensional change is not less than 0.0030.

4. The process as set forth in claims 1, 2 or 3 hereof wherein the bending stiffness value required for said floor structure is determined by constructing a test floor structure comprising said matrix material and said reinforcing materials, measuring the relaxed compressive stiffness thereof, and determining from said curve the bending stiffness which corresponds to said measured relaxed compressive stiffness, said test structure having a basis weight essentially equivalent to the selected basis weight.

5. A process for making a self-accommodating resilient loose-lay floor structure, said process comprising the steps of

selecting a matrix material and at least one reinforcing material, and

disposing at least two layers of reinforcing material within said matrix material such that the bending stiffness of said loose-lay floor structure is from about 0.1 to about 9 inch-pounds (about 0.01 to about 1 Newton-meter), at least one layer of reinforcing material being approximately above the neutral bending plane of said loose-lay floor structure and at least one layer of reinforcing material being approximately below said neutral bending plane,

said matrix material and said reinforcing materials being selected such that the sum of the relaxed compressive stiffness values for said reinforcing materials is not less than the relaxed compressive stiffness value for said matrix material and the basis weight of said floor structure is from about 2 to about 10 pounds per square yard (about 1 to about 5.5 kilograms per square meter), whereby said loose-lay floor structure accommodates the movement of a subfloor over which it is used.

6. The process as set forth in claim 5 hereof wherein a substantial portion of at least one of said reinforcing layers does not lie in the plane thereof.

7. The process as set forth in claim 5 hereof wherein the relaxed compressive stiffness of at least one of said reinforcing layers has been modified.

8. The process as set forth in claim 7 hereof wherein said modification has been accomplished *in situ*.

9. A self-accommodating resilient loose-lay floor structure, said floor structure having a basis weight of from about 2 to about 10 pounds per square yard (about 1 to about 5.5 kilograms per square meter) and comprising a matrix material and at least two layers of reinforcing material disposed within said matrix material, at least one of said layers being approximately above the neutral bending plane of said loose-lay floor structure and at least one of said layers being approximately below said neutral bending plane, the sum of the relaxed compressive stiffness values for said reinforcing materials being not less than the relaxed compressive stiffness value for said matrix material, said floor structure having a bending stiffness of from about 0.1 to about 9 inch-pounds (about 0.01 to about 1 Newton-meter) and accommodating the movement of a subfloor over which it is used.

10. A process for treating a potential resilient loose-lay floor structure having a basis weight of from about 2 to about 10 pounds per square yard (about 1 to about 5.5 kilograms per square meter) and having at least two layers of reinforcing material disposed within a matrix material, at least one layer of reinforcing material being approximately above the neutral bending plane of said floor structure and at least one layer of reinforcing materials being approximately below said neutral bending plane, said structure being unsuitable for use as a loose-lay floor structure over a subfloor having an ascertained subfloor dimensional change because it has a bending stiffness which is in excess of about 9 inch-pounds (about 1 Newton-meter) or a critical buckle strain which is not greater than the ascertained subfloor dimensional change, or both, said process comprising the modification of at least one of said reinforcing layers such that the bending stiffness of the resultant flooring structure is within the range of from about 0.1 to about 9 inch-pounds (about 0.01 to about 1 Newton-meter) and the critical buckle strain of said resultant flooring structure is greater than said ascertained subfloor dimensional change.

11. A process for preparing a loose-lay flooring structure comprising a single reinforcing layer, said structure being suitable to accommodate the subfloor movement of a subfloor having an ascertainable subfloor dimensional change, said process comprising the steps of

selecting a flooring structure comprising a single reinforcing layer, the critical buckle strain of said structure being less than the subfloor dimensional change, and

modifying said flooring structure *in situ* such that the critical buckle strain becomes greater than said subfloor dimensional change.

12. The process as set forth in claim 11 hereof comprising the additional steps of

selecting a target critical buckle strain, said critical buckle strain being greater than said subfloor dimensional change;

measuring the relaxed compressive stiffness, the bending stiffness and the basis weight of said selected flooring structure;

plotting a contour curve of the target critical buckle strain for said selecting flooring structure by varying the bending stiffness values from about 0 to about 9 inch-pounds (about 0 to about 1 Newton-meter) and by varying the relaxed compressive stiffness values from about 0 to about 10,000 pounds per inch of width (about 0 to about 1.75 × $10^6$ Newtons per meter of width);

determining from said contour curve the target relaxed compressive stiffness which will be required for said modified flooring structure; and

modifying said selected flooring structure *in situ* such that the resulting modified flooring structure has a relaxed compressive stiffness value which is the same as or less than the target relaxed compressive stiffness.

13. A modified loose-lay flooring structure comprising a single reinforcing layer and being suitable to accommodate the subfloor movement of a subfloor having an ascertainable subfloor dimensional change, said structure having been obtained by modifying *in situ* a flooring structure having a critical buckle strain which is less than the subfloor dimensional change of said subfloor, said modified flooring structure having a critical buckle strain which is greater than said subfloor dimensional change.

14. The structure as set forth in claim 13 hereof wherein said *in situ* modification was achieved by

selecting a target critical buckle strain, said critical buckle strain being greater than said subfloor dimensional change;

determining the relaxed compressive stiffness, the bending stiffness and the basis weight of said flooring structure;

plotting a contour curve of the target critical buckle strain for said flooring structure by varying the bending stiffness values from about 0 to about 9 inch-pounds (about 0 to about 1 Newton-meter) and by varying the relaxed compressive stiffness values from about 0 to about 10,000 pounds per inch of width (about 0 to about 1.75 × $10^6$ Newtons per meter of width;

determining from said contour curve the relaxed compressive stiffness required for said modified flooring structure; and

modifyng said flooring structure *in situ* such that the resulting modified flooring structure has a relaxed compressive stiffness value which is the same as or less than the target relaxed compressive stiffness.

15. A structure as claimed in any one of claims 9, 13 or 14, or a structure the product of a process as claimed in any one of claims 1 to 8 or 10 to 12, in position on a subfloor the dimensional change of which will provide a strain less than the critical buckle strain.

**Patentansprüche**

1. Verfahren zur Herstellung eines elastischen, lose verlegbaren Bodenbelags zur Verwendung auf einem Unterboden mit einer feststellbaren Unterboden-Abmessungsänderung, welches folgende Schritte aufweist:

Wahl einer kritischen Soll-Beulbelastung für den Bodenbelag, die größer ist als die Unterboden-Abmessungsänderung,

Wahl eines angenäherten Basisgewichts für den Bodenbelag, das in dem Bereich von etwa 2 bis etwa 10 $lb/yd^2$ (etwa 1 bis etwa 5,5 $kg/m^2$) liegt,

Auftragen einer Konturkurve der gewählten kritischen Beulbelastung für das gewählte Basisgewicht durch Variieren der Biegesteifigkeitswerte von etwa 0 bis etwa 9 inch · lb (etwa 0 bis etwa 1 Nm) und durch Variieren der entspannten Drucksteifigkeitswerte von etwa 0 bis etwa 10.000 lb/inch Breite (etwa 0 bis etwa 1,75 · $10^6$ N/m Breite),

Bestimmen des Bereiches aus der Konturkurve, der von dem Minimum bzw. Maximum der entspannten Drucksteifigkeitswerte entsprechend den Biegesteifigkeitswerten von etwa 0,1 bzw etwa 9 inch · lb (etwa 0,01 bzw. etwa 1 Nm) begrenzt wird,

Wahl eines Grundmaterials und wenigstens zweier Schichten von Verstärkungsmaterial derart, daß die Summe der entspannten Drucksteifigkeitswerte für diese Materialien in den bestimmten Bereich fällt, wobei das Grundmaterial und die Verstärkungsmaterialien so gewählt werden, daß die Summe der entspannten Drucksteifigkeitswerte für die Verstärkungsmaterialien nicht kleiner ist als die Summe der entspannten Drucksteifigkeitswerte für das Grundmaterial,

Bestimmen des Biegesteifigkeitswertes aus der Konturkurve, der für die Summe der entspannten Drucksteifigkeitswerte für die Verstärkungsmaterialien und das Grundmaterial anwendbar ist, und

Anordnen der Schichten aus Verstärkungsmaterial in dem Grundmaterial derart, daß die gemessene Biegesteifigkeit des erhaltenen Bodenbelags der festgelegten Biegesteifigkeit entspricht, wobei wenigstens eine Verstärkungsschicht annähernd über der neutralen Biegebene des sich ergebenden Bodenbelags und wenigstens eine Verstärkungsschicht annähernd unter der neutralen Biegeebene liegt, und wobei die kritische Beulbelastung für den sich ergebenden Bodenbelag annähernd gleich der kritischen Soll-Beulbelastung und größer als die Belastung ist, die als Ursache der Unterboden-Abmessungsänderung erwartet wird.

2. Verfahren nach Anspruch 1, bei welchem der aus der Konturkurve bestimmte Minimalwert des entspannten Drucksteifigkeitswertes einem minimalen Biegesteifigkeitswert von 1 inch · lb (0,1 Nm)

entspricht, wobei der Bodenbelag auf einem Unterboden Verwendung finden soll, der eine Unterboden-Abmessungsänderung von nicht weniger als 0,0015 hat.

3. Verfahren nach Anspruch 2, bei welchem der minimale Biegesteifigkeitswert 3 inch · lb (0,3 Nm) ist und die Unterboden Abmessungsänderung nicht weniger als 0,0030 beträgt.

4. Verfahren nach Anspruch 1, 2 oder 3, bei welchem der für den Bodenbelag erforderliche Biegesteifigkeitswert durch das Bauen eines Versuchsbodenbelags festgelegt wird, der das Grundmaterial und die Verstärkungsmaterialien aufweist, seine entspannte Kompressionssteifigkeit gemessen wird und aus dieser Kurve die Biegesteifigkeit festgelegt wird, die der gemessenen entspannten Drucksteifigkeit entspricht, wobei der Versuchsbelag ein Basisgewicht hat, das im wesentlichen äquivalent zu dem ausgewählten Basisgewicht ist.

5. Verfahren zur Herstellung eines sich selbst anpassenden, elastischen, lose verlegbaren Bodenbelags, welches folgende Schritte umfaßt:

Wahl eines Grundmaterials und wenigstens eines Verstärkungsmaterials und

Anordnen von wenigstens zwei Schichten des Verstärkungsmaterials in dem Grundmaterial derart, daß die Biegesteifigkeit des lose verlegbaren Bodenlags von etwa 0,1 bis etwa 9 inch · lb (etwa 0,01 bis etwa 1 Nm) reicht, wobei wenigstens eine Schicht des Verstärkungsmaterials annähernd über der neutralen Biegeebene des lose verlegbaren Bodenbelags und wenigstens eine Schicht des Verstärkungsmaterials annähernd unter der neutralen Biegeebene liegen, wobei das Grundmaterial und die Verstärkungsmaterialien so gewählt werden, daß die Summe der entspannten Drucksteifigkeitswerte für die Verstärkungsmaterialien nicht kleiner als der entspannte Drucksteifigkeitswert für das Grundmaterial ist und das Basisgewicht des Bodenbelags von etwa 2 bis etwa 10 $lb/yd^2$ (etwa 1 bis etwa 5,5 $kg/m^2$) reicht, wodurch sich der lose verlegbare Bodenbelag der Bewegung eines Unterbodens anpaßt, auf welchem er verwendet wird.

6. Verfahren nach Anspruch 5, bei welchem ein wesentlicher Teil von wenigstens einer der Verstärkungsschichten nicht in deren Ebene liegt.

7. Verfahren nach Anspruch 5, bei welchem die entspannte Drucksteifigkeit von wenigstens einer der Verstärkungsschichten modifiziert worden ist.

8. Verfahren nach Anspruch 7, bei welchem die Modifizierung *in situ* ausgeführt worden ist.

9. Sich selbst anpassender elastischer, lose verlegbarer Bodenbelag, der ein Basisgewicht von etwa 2 bis etwa 10 $lb/yd^2$ (etwa 1 bis etwa 5,5 $kg/m^2$) hat und ein Grundmaterial und wenigstens zwei Schichten eines Verstärkungsmaterials aufweist, die in dem Grundmaterial angeordnet sind, wobei wenigstens eine der Schichten annähernd über der neutralen Biegeebene des lose verlegbaren Bodenbelags und wenigstens eine der Schichten annähernd unter der neutralen Biegeebene liegen, die Summe der entspannten Drucksteifigkeitswerte für die Verstärkungsmaterialien nicht kleiner als der entspannte Drucksteifigkeitswert für das Grundmaterial ist, der Bodenbelag eine Biegesteifigkeit von etwa 0,1 bis etwa 9 inch · lb (etwa 0,01 bis etwa 1 Nm) hat und sich an die Bewegung eines Unterbodens, auf welchem er benutzt wird, anpaßt.

10. Verfahren zur Behandlung eines potentiellen, elastischen, lose verlegbaren Bodenbelags mit einem Basisgewicht von etwa 2 bis etwa 10 $lb/yd^2$ (etwa 1 bis etwa 5,5 $kg/m^2$) und mit wenigstens zwei Schichten eines Verstärkungsmaterials, die in einem Grundmaterial angeordnet sind, wobei wenigstens eine Schicht des Verstärkungsmaterials annähernd über der neutralen Biegeebene des Bodenbelags und wenigstens eine Schicht des Verstärkungsmaterials annähernd unter der neutralen Biegeebene angeordnet sind, der Belag für die Verwendung als lose verlegbarer Bodenbelag über einem Unterboden mit einer festgestellten Unterboden-Abmessungsänderung ungeeignet ist, da er eine Biegesteifigkeit von über etwa 9 inch · lb (etwa 1 Nm) oder eine kritische Beulbelastung, die nicht größer als die festgestellte Unterboden-Abmessungsänderung ist, oder beides hat, wobei dieses Verfahren die Modifizierung von wenigstens einer der Verstärkungsschichten derart aufweist, daß die Biegesteifigkeit des sich ergebenden Bodenbelags innerhalb des Bereiches von etwa 0,1 bis etwa 9 inch · lb (etwa 0,01 bis etwa 1 Nm) liegt und die kritische Beulbelastung des sich ergebenden Bodenbelags größer als die festgestellte Unterboden-Abmessungsänderung ist.

11. Verfahren zur Herstellung eines lose verlegbaren Bodenbelags, der eine einzige Verstärkungsschicht aufweist, wobei der Belag geeignet ist, sich der Unterbodenbewegung eines Unterbodens anzupassen, der eine feststellbare Unterboden-Abmessungsänderung hat, wobei das Verfahren die Schritte aufweist, nämlich Wahl eines Bodenbelags, der eine einzige Verstärkungsschicht aufweist, wobei die kritische Beulbelastung des Belags geringer als die Unterboden-Abmessungsänderung ist, und

Modifizierung des Bodenbelags *in situ* derart, daß die kritische Beulbelastung größer als die Unterboden-Abmessungsänderung wird.

12. Verfahren nach Anspruch 11, welches die zusätzlichen Schritte aufweist, nämlich

Wahl einer kritischen Soll-Beulbelastung, die größer ist als die Unterboden-Abmessungsänderung,

Messen der entspannten Drucksteifigkeit, der Biegesteifigkeit und des Basisgewichtes des ausgewählten Bodenbelags,

Auftragen einer Konturkurve der kritischen Soll-Beulbelastung für den ausgewählten Bodenbelag durch Variieren der Biegesteifigkeitswerte von etwa 0 bis etwa 9 inch · lb (etwa 0 bis etwa 1 Nm) und durch Variieren der entspannten Drucksteifigkeitswerte von etwa 0 bis etwa 10,000 lb/inch Breite (etwa 0 bis etwa 1,75 · $10^6$ N/m Breite),

Bestimmen des Sollwertes der entspannten Drucksteifigkeit aus der Konturkurve, der für den modifizierten Bodenbelag erforderlich ist, und

Modifizieren des ausgewählten Bodenbelags *in situ* derart, daß der sich ergebende modifizierte Bodenbelag einen entspannten Drucksteifigkeitswert hat, der genauso groß oder kleiner als der Sollwert der entspannten Drucksteifigkeit ist.

13. Modifizierter, lose verlegbarer Bodenbelag, welcher eine einzige Verstärkungsschicht aufweist und geeignet ist, sich der Unterbodenbewegung eines Unterbodens anzupassen, der eine feststellbare Unterboden-Abmessungsänderung aufweist, wobei der Belag durch Modifizieren eines Bodenbelags *in situ* erhalten worden ist, der eine kritische Beulbelastung hat, die kleiner ist als die Unterboden-Abmessungsänderung des Unterbodens, während der modifizierte Bodenbelag eine kritische Beulbelastung hat, die größer als die Unterboden-Abmessungsänderung ist.

14. Belag nach Anspruch 13, bei welchem die *in situ*-Modifizierung erreicht worden ist durch

Wahl einer kritischen Soll-Beulbelastung, die größer ist als die Unterboden-Abmessungsänderung,

Bestimmen der entspannten Drucksteifigkeit, der Biegesteifigkeit und des Basisgewichtes des Bodenbelags,

Auftragen einer Konturkurve für die kritische Soll-Beulbelastung für den Bodenbelag durch Variieren der Biegesteifigkeitswerte von etwa 0 bis etwa 9 inch · lb (etwa 0 bis etwa 1 Nm) und durch Variieren der entspannten Drucksteifigkeitswerte von etwa 0 bis etwa 10.000 lb/inch Breite (etwa 0 bis etwa 1,75 · $10^6$ N/m Breite),

Bestimmen der entspannten Drucksteifigkeit, die für den modifizierten Bodenbelag erforderlich ist, aus der Konturkurve, und

Modifizieren des Bodenbelags *in situ* derart, daß der sich ergebende modifizierte Bodenbelag einen entspannten Drucksteifigkeitswert hat, der genauso groß oder kleiner ist als der Sollwert der entspannten Drucksteifigkeit.

15. Belag nach einem der Ansprüche 9, 13 oder 14, oder Belag als Produkt des Verfahrens nach einem der Ansprüche 1 bis 8 oder 10 bis 12, in Position auf einem Unterboden, dessen Abmessungsänderung eine Beanspruchung vorsieht, die kleiner ist als die kritische Sollbelastung.

**Revendications**

1. Procédé permettant de réaliser une structure de plancher à pose libre qui est élastique et est destinée à être utilisée sur un sousplancher offrant une variation de dimension pouvant être constatée, ce procédé consistant:

à choisir une contrainte critique de flambage cible pour la structure de plancher, cette contrainte critique de flambage étant supérieure à la variation dimensionnelle du sous-plancher,

à choisir un poids de base approximatif pour la structure de plancher, ce poids de base se trouvant à l'intérieur de la gamme d'environ 2 à environ 10 livres par yard carré (d'environ I à environ 5,5 kilogrammes par mètre carré),

à tracer la courbe de diagramme à courbes de niveau, de la contrainte critique de flambage choisie pour ledit poids de base choisi, en faisant varier les valeurs de la rigidité à la flexion d'environ 0 à environ 9 pouce-livres (environ 0 à environ 1 Newton-mètre) et en faisant varier les valeurs de la rigidité à la compression en relaxation d'environ 0 à environ 10.000 livres par pouce de largeur (environ 0 à environ 1,75 × $10^6$ Newtons par mètre de largeur),

à déterminer, à partir de cette courbe de niveau, le domaine défini par les valeurs minimale et maximale de la rigidité à la compression en relaxation correspondant respectivement à des valeurs de rigidité à la flexion d'environ 0,1 et environ 9 pouce-livres (environ 0,01 et environ 1 Newton-mètre),

à choisir un matériau formant matrice et au moins deux couches de matériau de renforcement tels que la somme des valeurs des rigidités à la compression en relaxation de ces matériaux tombe à l'intérieur de la gamme déterminée, ce matériau de matrice et ces matériaux de renforcement étant choisis tels que la somme des valeurs des rigidités à la compression en relaxation des matériaux de renforcement n'est pas inférieur à la somme des valeurs de la rigidité à la compression en relaxation du matériau de matrice,

à déterminer, à partir de la courbe de niveau, la valeur de rigidité à la flexion applicable à la somme des valeurs de rigidité à la compression en relaxation des matériaux de renforcement et du matériau de matrice, et

à disposer les couches de matériau de renforcement à l'intérieur du matériau de matrice d'une façon telle que la rigidité à la flexion mesurée de la structure de plancher résultante correspond à la rigidité à la flexion déterminée, au moins une couche de renforcement étant située approximativement au-dessus de la couche de fibres neutres située en flexion de la structure de plancher résultante et au moins une couche de renforcement étant située approximativement au-dessous de cette couche de fibres neutres en flexion, la contrainte critique de flambage de cette structure de plancher résultante étant approximativement équivalente à la contrainte critique de flambage cible et supérieure à la contrainte que l'on s'attend être provoquée par la variation dimensionnelle du sous-plancher.

2. Procédé suivant la revendication 1, dans lequel la valeur minimale de rigidité à la compression en relaxation, déterminée à partir de la courbe de niveau, correspond à une valeur minimale de rigidité à la flexion de 1 pouce-livre (0,1 Newton-mètre), la structure de plancher étant destinée à être utilisée sur un sous-plancher offrant une variation dimensionnelle qui n'est pas inférieur à 0,0015.

3. Procédé suivant la revendication 2, dans lequel la valeur minimale de rigidité à la flexion est de 3 pouce-livres (0,3 Newton-mètre) et la variation dimensionnelle du sous-plancher n'est pas inférieure à 0,0030.

4. Procédé suivant les revendications 1, 2 ou 3, dans lequel on détermine la valeur de rigidité à la flexion requise pour la structure de plancher en construisant une structure de plancher d'essai comprenant ledit matériau de matrice et lesdits matériaux de renforcement, en mesurant sa rigidité à la compresison en relaxation, et en déterminant, à partir de ladite courbe, la rigidité à la flexion qui correspond à ladite rigidité à la compression en relaxation mesurée, cette structure d'essai ayant un poids de base essentiellement équivalent au poids de base choisi.

5. Procédé permettant de réaliser une structure de plancher à pose libre qui est élastique et à autoadaptation, ce procédé consistant:

à choisir un matériau formant matrice et au moins un matériau de renforcement, et

à disposer au moins deux couches du matériau de renforcement à l'intérieur du matériau de matrice d'une façon telle que la rigidité à la flexion de la structure de plancher à pose libre soit d'environ 0,1 à environ 9 pouce-livres (environ 0,01 à environ 1 Newton-mètre), au moins une couche de matériau de renforcement étant située approximativement au-dessus de la couche de fibres neutres en flexion de la structure de plancher à pose libre et au moins une couche de matériau de renforcement étant située approximativement au-dessous de cette couche de fibres neutres en flexion,

le matériau de matrice et les matériaux de renforcement étant choisis d'une fâcon telle que la somme des valeurs des rigidités à la compression en relaxation des matériaux de renforcement ne soit pas inférieure à la valeur de rigidité à la compression en relaxation du matériau de matrice et que le poids de base de la structure de plancher soit d'environ 2 à environ 10 livres par yard carré (environ 1 à environ 5,5 kilogrammes par mètre carré), permettant ainsi à la structure de plancher à pose libre de s'adapter au déplacement d'un sous-plancher sur lequel on l'utilise.

6. Procédé suivant la revendication 5, dans lequel une partie notable d'au moins l'une des couches de renforcement ne se trouve pas située dans le plan de celle-ci.

7. Procédé suivant la revendication 5, dans lequel la rigidité à la compression en relaxation d'au moins une des couches de renforcement a été modifiée.

8. Procédé suivant la revendication 7, dans lequel ladite modification a été accomplie in situ.

9. Structure de plancher à pose libre, élastique et à auto- adaptation, cette structure de plancher offrant un poids de base d'environ 2 à environ 10 livres par yard carré (environ 1 à environ 5,5 kilogrammes par mètre carré) et comprenant un matériau formant matrice et au moins deux couches de matériau de renforcement disposées à l'intérieur de ce matériau de matrice, au moins l'une de ces couches étant située approximativement au-dessus de la couche de fibres neutres en flexion de la structure de plancher à pose libre et au moins l'une de ces couches étant situé approximativement au-dessous de cette couche de fibres neutres en flexion, la somme des valeurs des rigidités à la compression en relaxation desdits matériaux de renforcement n'étant pas inférieure à la valeur de rigidité à la compression en relaxation du matériau de matrice, la structure de plancher offrant une rigidité à la flexion d'environ 0,1 à environ 9 pouce-livres (environ 0,01 à environ 1 Newton-mètre) et s'adaptant au déplacement d'un sous-plancher sur lequel on l'utilise.

10. Procédé permettant de traiter une structure potentielle de plancher élastique et à pose libre offrant un poids de base d'environ 2 à environ 10 livres par yard carré (environ 1 à environ 5,5 kilogrammes par mètre carré) et comportant au moins deux couches de matériau de renforcement disposées à l'intérieur d'un matériau formant matrice, au moins une couche de matériau de renforcement étant située approximativement au-dessus de la couche de fibres neutres en flexion de la structure de plancher et au moins une couche de matériau de renforcement étant située approximativement au-dessous de cette couche de fibres neutres en flexion, cette structure ne convenant pas pour être utilisée en tant que structure de plancher à pose libre sur un sous-plancher offrant une variation dimensionnelle constatée, parce qu'offrant une rigidité à la flexion qui dépasse environ 9 pouce-livres (environ 1 Newton-mètre) ou une contrainte critique de flambage qui n'est pas supérieure à la variation dimensionnelle du sous-plancher constatée, ou les deux, ce procédé consistant à modifier au moins l'une des couches de renforcement d'une façon telle que la rigidité à la flexion de la structure de plancher résultante soit à l'intérieur de la gamme d'environ 0,1 à environ 9 pouces-livres (environ 0,01 à environ 1 Newton-mètre) et que la contrainte critique de flambage de cette structure de plancher résultante soit supérieure à la variation dimensionnelle du sous-plancher constatée.

11. Procédé de préparation d'une structure de plancher à pose libre comprenant une couche unique de renforcement, cette structure convenant pour s'adapter au déplacement d'un sous-plancher offrant une variation dimensionnelle pouvant être constatée, ce procédé consistant:

à choisir une structure de plancher comprenant une couche unique de renforcement, la contrainte critique de flambage de cette structure étant inférieure à la variation dimensionnelle du sous-plancher, et

à modifier cette structure de plancher in situ d'une façon telle que la contrainte critique de flambage devient supérieure à la variation dimensionnelle du sous-plancher.

12. Procédé suivant la revendication 11, consistant en outre:

à choisir une contrainte critique de flambage cible, cette contrainte critique de flambage étant supérieure à ladite variation dimensionnelle du sous-plancher,

à mesurer la rigidité à la compression en relaxation, la rigidité à la flexion et le poids de base de ladite structure de plancher choisie,

à tracer la courbe de niveau de la contrainte critique de flambage cible de cette structure de plancher choisie, en faisant varier les valeurs de la rigidité à la flexion d'environ 0 à environ 9 pouces-livres (environ 0 à environ 1 Newton-mètre) et en faisant varier les valeurs de la rigidité à la compression en relaxation d'environ 0 à environ 10.000 livres par pouce de largeur (environ 0 à environ $1{,}75 \times 10^6$ Newtons par mètre de largeur),

à déterminer, à partir de cette courbe de niveau, la rigidité à la compression en relaxation cible qui sera requise pour ladite structure de plancher modifiée, et

à modifier in situ ladite structure de plancher choisie d'une façon telle que la structure de plancher modifiée résultante offre une valeur de rigidité à la compression en relaxation qui est la même que la rigidité à la compression en relaxation cible ou lui est inférieure.

13. Structure de plancher à pose libre, modifiée, comprenant une couche unique de renforcement et convenant pour s'adapter au déplacement d'un sous-plancher offrant une variation dimensionnelle pouvant être constatée, cette structure ayant été obtenue en modifiant in situ une structure de plancher offrant une contrainte critique de flambage qui est inférieure à la variation dimensionnelle dudit sous-plancher, cette structure de plancher modifiée offrant une contrainte critique de flambage qui est supérieure à ladite variation dimensionnelle du sous-plancher.

14. Structure suivant la revendication 13, dans laquelle la modification in situ a été obtenue:

en choisissant une contrainte critique de flambage cible, cette contrainte critique de flambage étant supérieure à ladite variation dimensionnelle du sous-plancher,

en déterminant la rigidité à la compression en relaxation, la rigidité à la flexion et le poids de base de la structure de planche,

en traçant la courbe de niveau de la contrainte critique de flambage cible de cette structure de plancher, en faisant varier les valeurs de la rigidité à la flexion d'environ 0 à environ 9 pouces-livres (environ 0 à environ 1 Newton-mètre) et en faisant varier les valeurs de la rigidité à la compression en relaxation d'environ 0 à environ 10.000 livres par pouce de largeur (environ 0 à environ $1{,}75 \times 10^6$ Newtons par mètre de largeur),

en déterminant, à partir de cette courbe de niveau, la rigidité à la compression en relaxation requise pour la structure de plancher modifiée, et

en modifiant in situ cette structure de plancher d'une façon telle que la structure de plancher modifiée résultante offre une valeur de rigidité à la compression en relaxation qui est la même que la rigidité à la compression en relaxation cible ou lui est inférieure.

15. Structure suivant l'une quelconque des revendications 9, 13 ou 14, ou structure constituant le produit obtenu par un procédé suivant l'une quelconque des revendications 1 à 8 ou 10 à 12, en position sur un sous-plancher dont la variation dimensionnelle créera une contrainte inférieure à la contrainte critique de flambage.

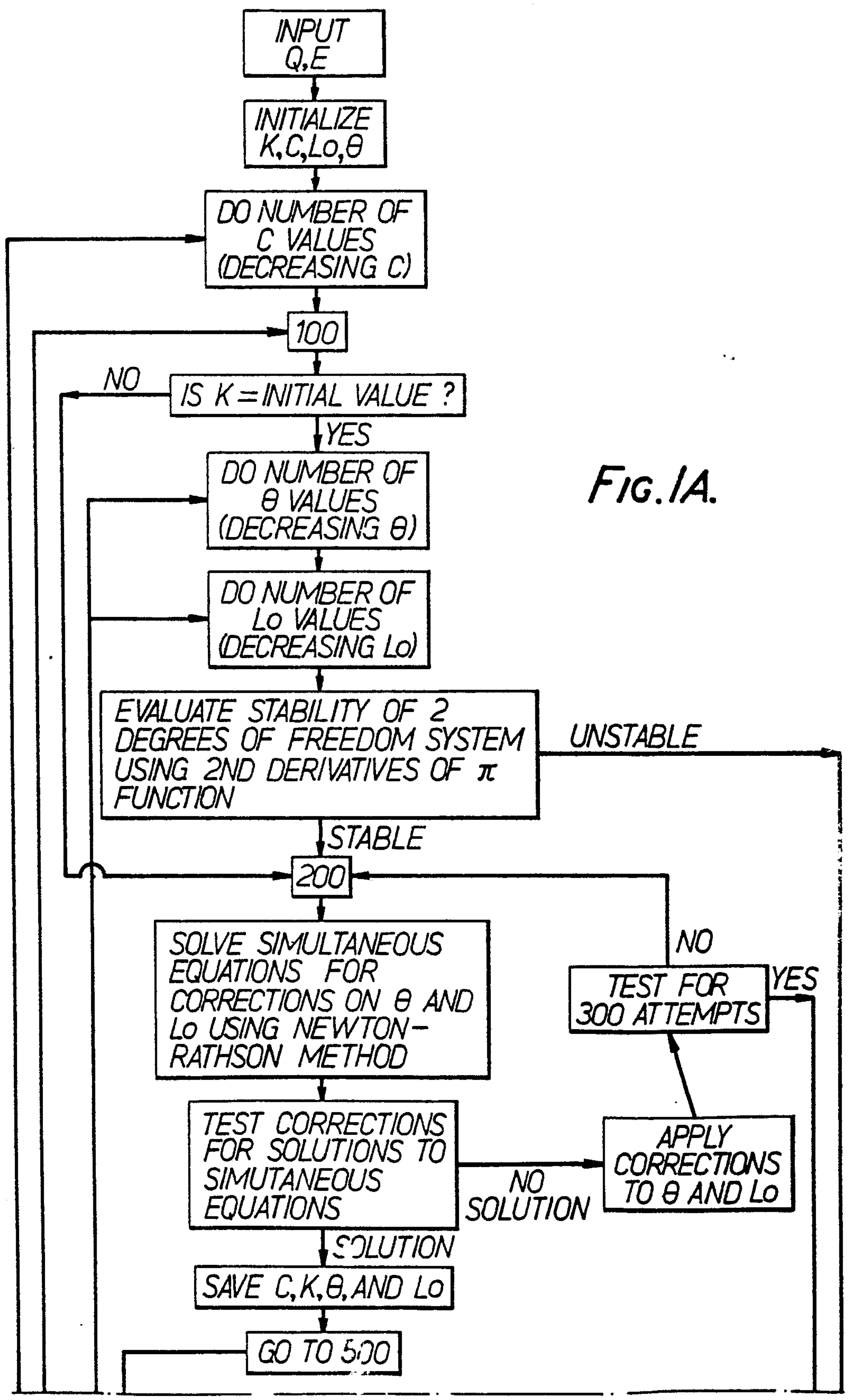
INPUT Q,E
INITIALIZE K,C,Lo,θ
DO NUMBER OF C VALUES (DECREASING C)
100
NO
IS K = INITIAL VALUE ?
YES
DO NUMBER OF θ VALUES (DECREASING θ)
DO NUMBER OF Lo VALUES (DECREASING Lo)
EVALUATE STABILITY OF 2 DEGREES OF FREEDOM SYSTEM USING 2ND DERIVATIVES OF π FUNCTION
UNSTABLE
STABLE
200
SOLVE SIMULTANEOUS EQUATIONS FOR CORRECTIONS ON θ AND Lo USING NEWTON-RATHSON METHOD
NO
TEST FOR 300 ATTEMPTS
YES
TEST CORRECTIONS FOR SOLUTIONS TO SIMUTANEOUS EQUATIONS
NO SOLUTION
APPLY CORRECTIONS TO θ AND Lo
SOLUTION
SAVE C,K,θ, AND Lo
GO TO 500

FIG. 1A.

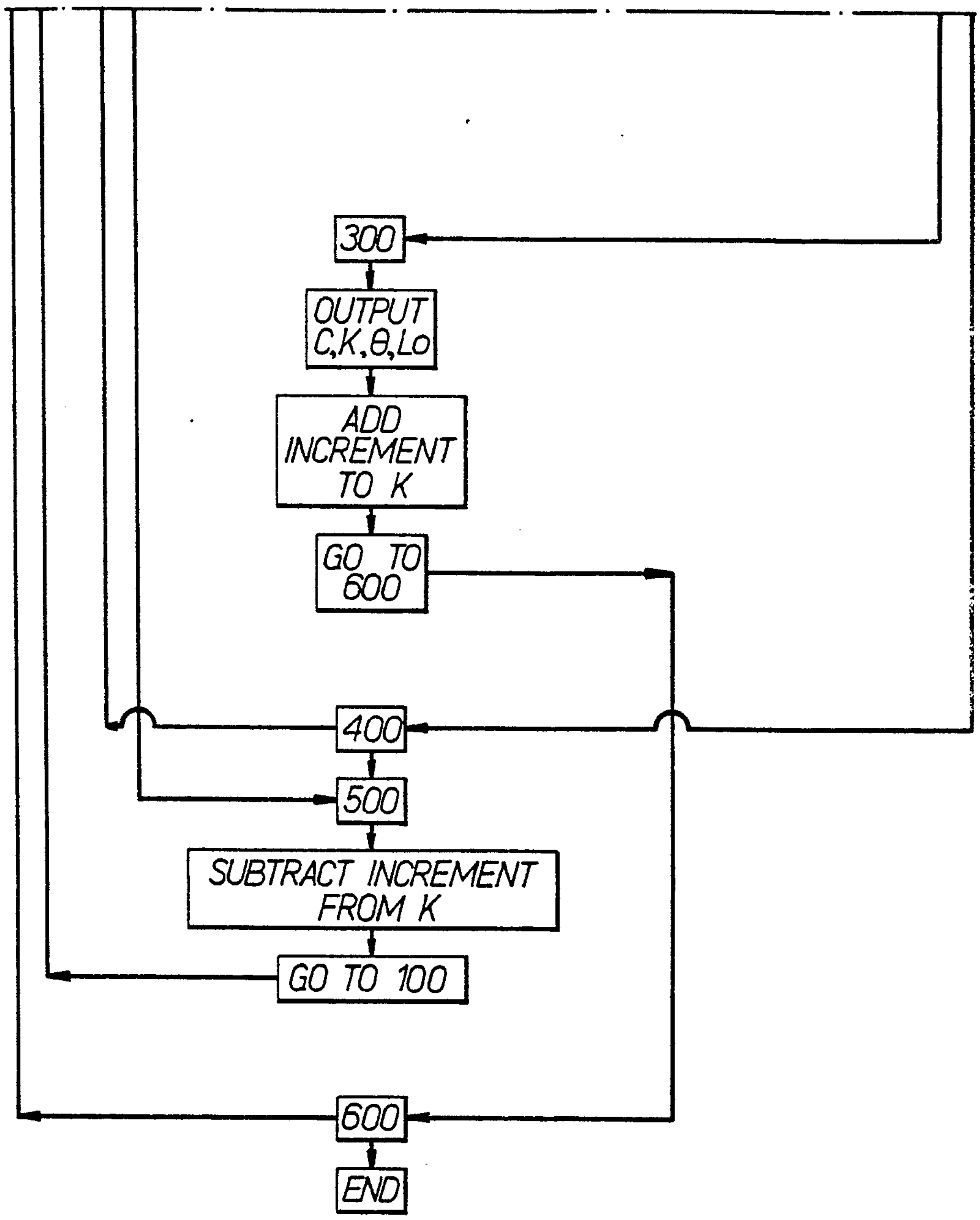
300
OUTPUT C,K,θ,Lo
ADD INCREMENT TO K
GO TO 600
400
500
SUBTRACT INCREMENT FROM K
GO TO 100
600
END

FIG. 1B.

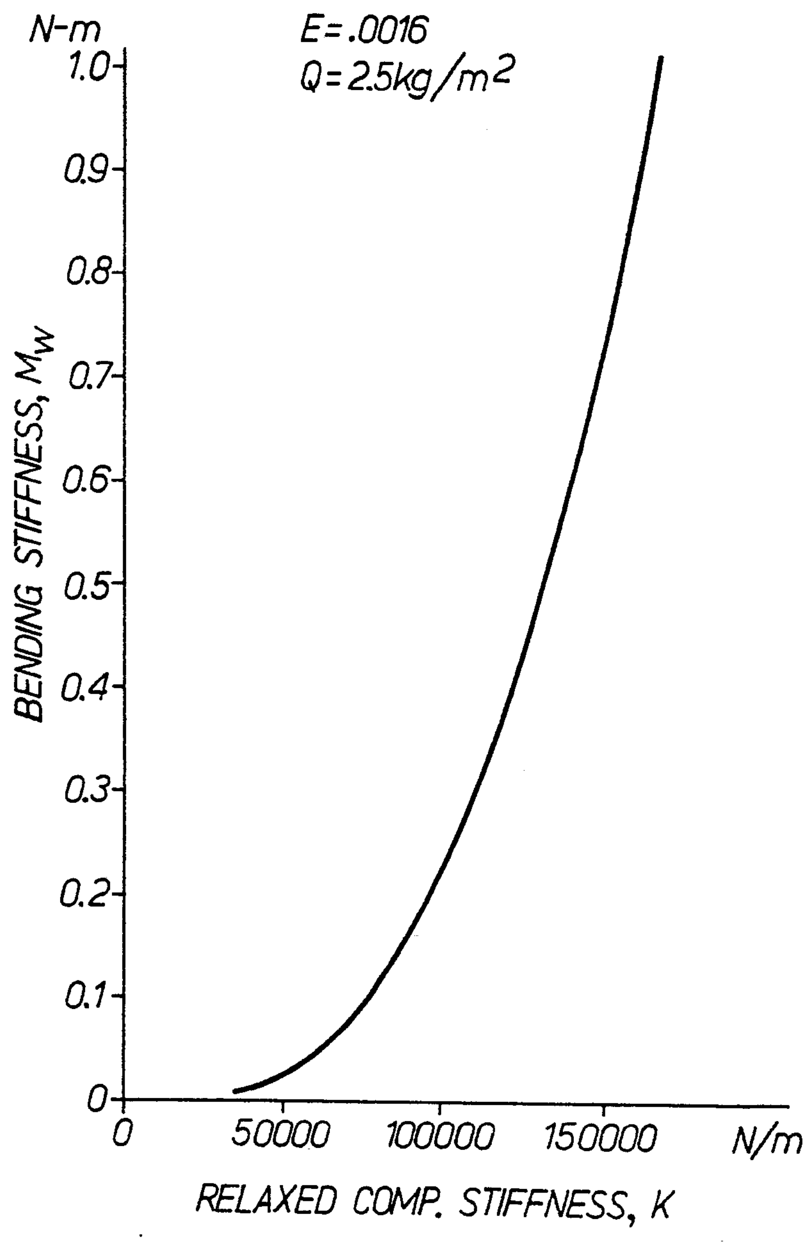
N-m
E=.0016
Q=2.5kg/m2
1.0
0.9
0.8
0.7
0.6
0.5
0.4
0.3
0.2
0.1
0
BENDING STIFFNESS, MW
0
50000
100000
150000
N/m
RELAXED COMP. STIFFNESS, K

FIG. 2.

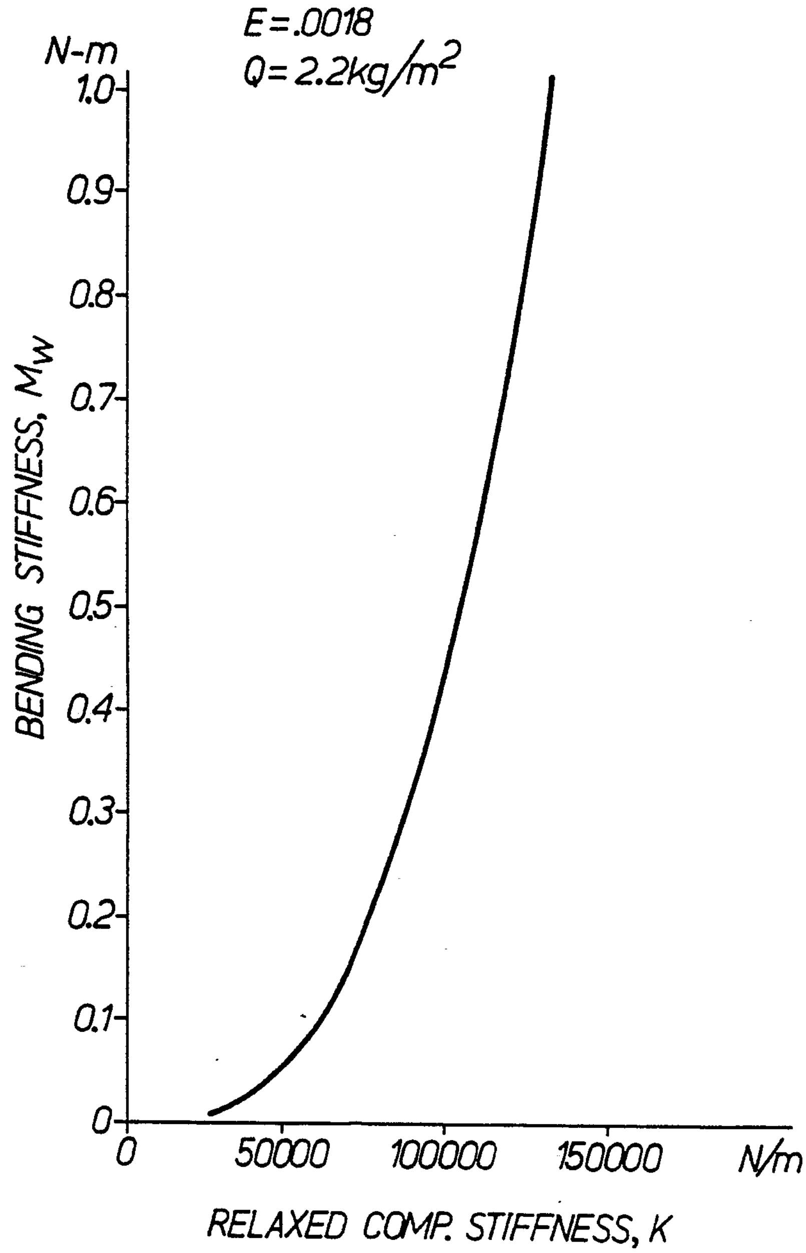
E=.0018
Q=2.2kg/m2
N-m
1.0
0.9
0.8
0.7
0.6
0.5
0.4
0.3
0.2
0.1
0
BENDING STIFFNESS, MW
0
50000
100000
150000
N/m
RELAXED COMP. STIFFNESS, K

FIG. 3.

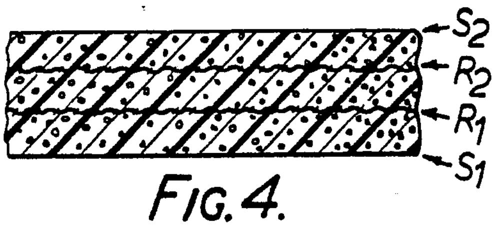


FIG. 4.

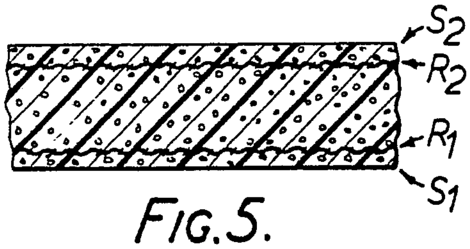


FIG. 5.

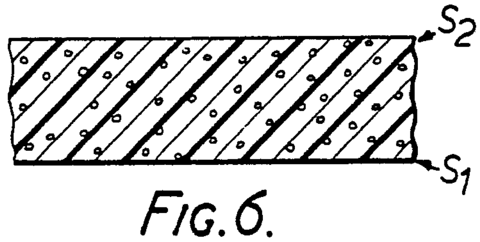


FIG. 6.

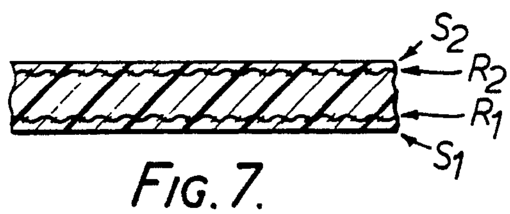


FIG. 7.

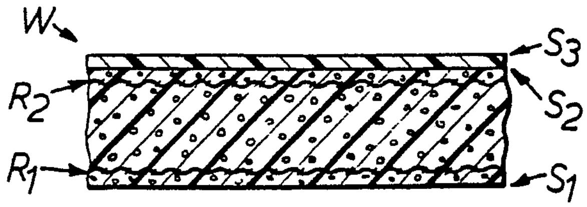


FIG. 8.

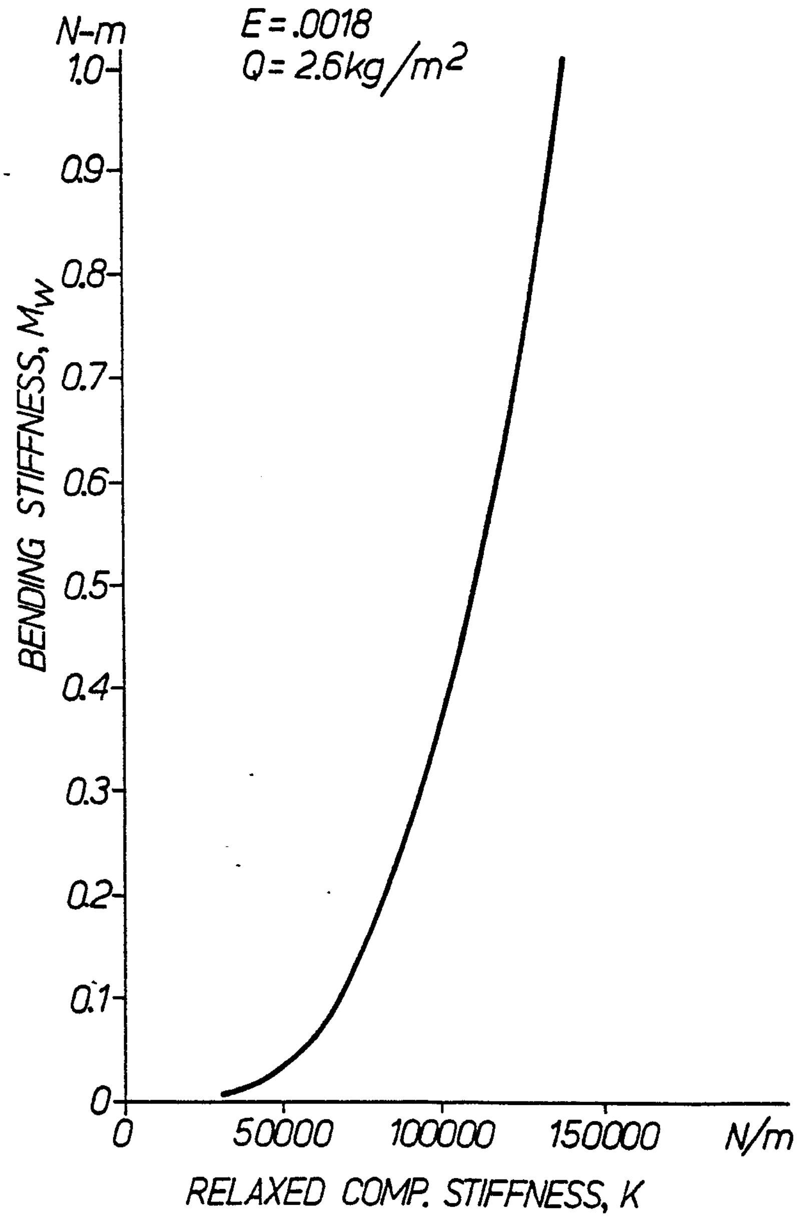
N-m
E=.0018
Q=2.6kg/m2
1.0
0.9
0.8
0.7
0.6
0.5
0.4
0.3
0.2
0.1
0
BENDING STIFFNESS, MW
0
50000
100000
150000
N/m
RELAXED COMP. STIFFNESS, K

FIG.9.

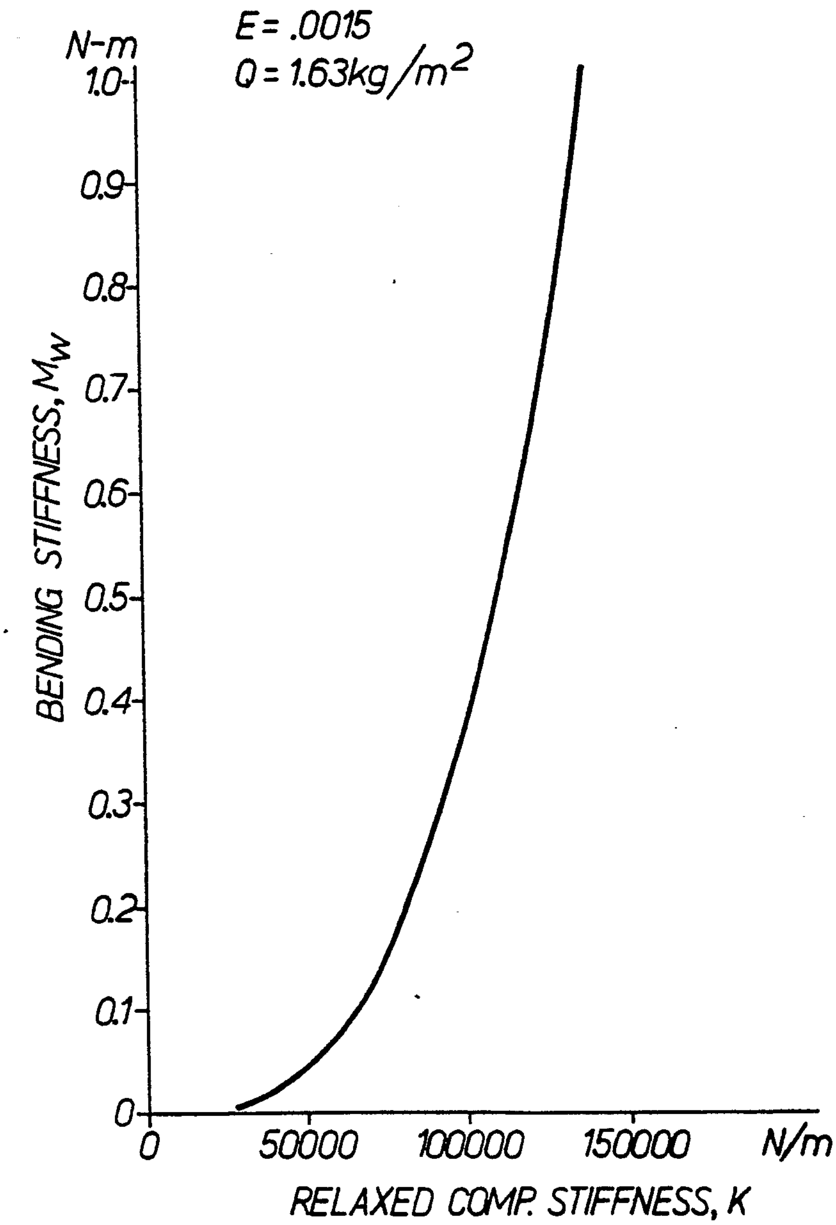
E= .0015
Q = 1.63kg/m²
N-m
1.0
0.9
0.8
0.7
0.6
0.5
0.4
0.3
0.2
0.1
0
BENDING STIFFNESS, Mw
0
50000
100000
150000
N/m
RELAXED COMP. STIFFNESS, K

FIG. 10.

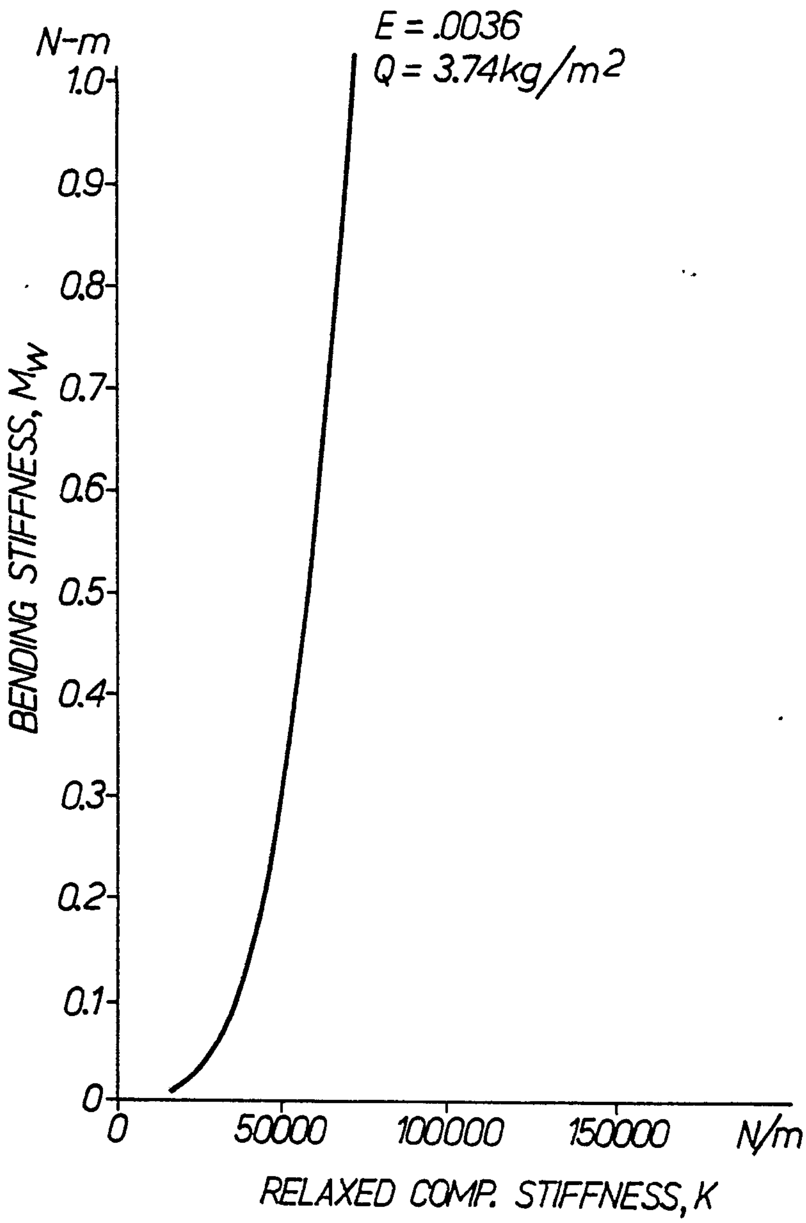
N-m
E = .0036
Q = 3.74kg/m2
1.0
0.9
0.8
0.7
0.6
0.5
0.4
0.3
0.2
0.1
0
BENDING STIFFNESS, MW
0
50000
100000
150000
N/m
RELAXED COMP. STIFFNESS, K

FIG. 11.

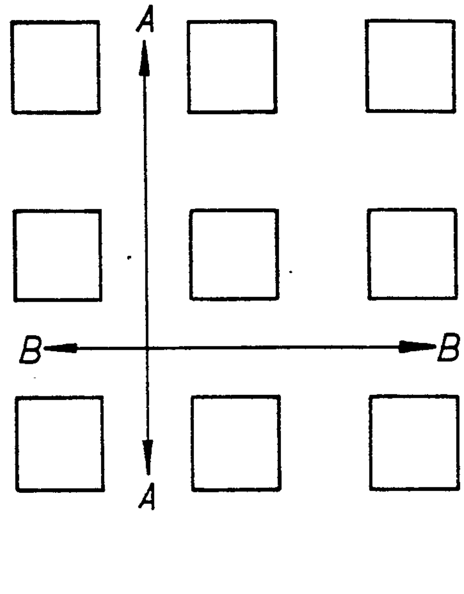


FIG. 12.

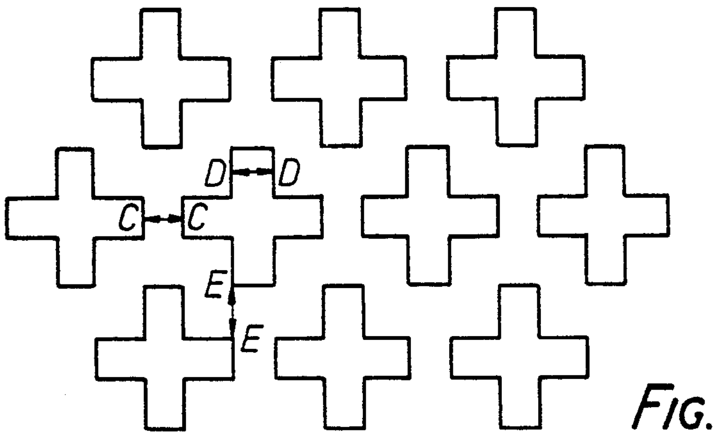


FIG. 13.

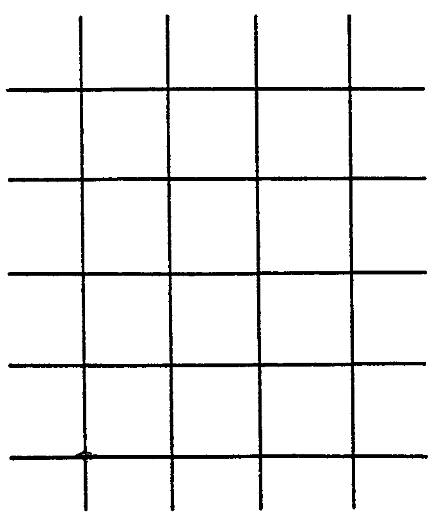

FIG. 14.

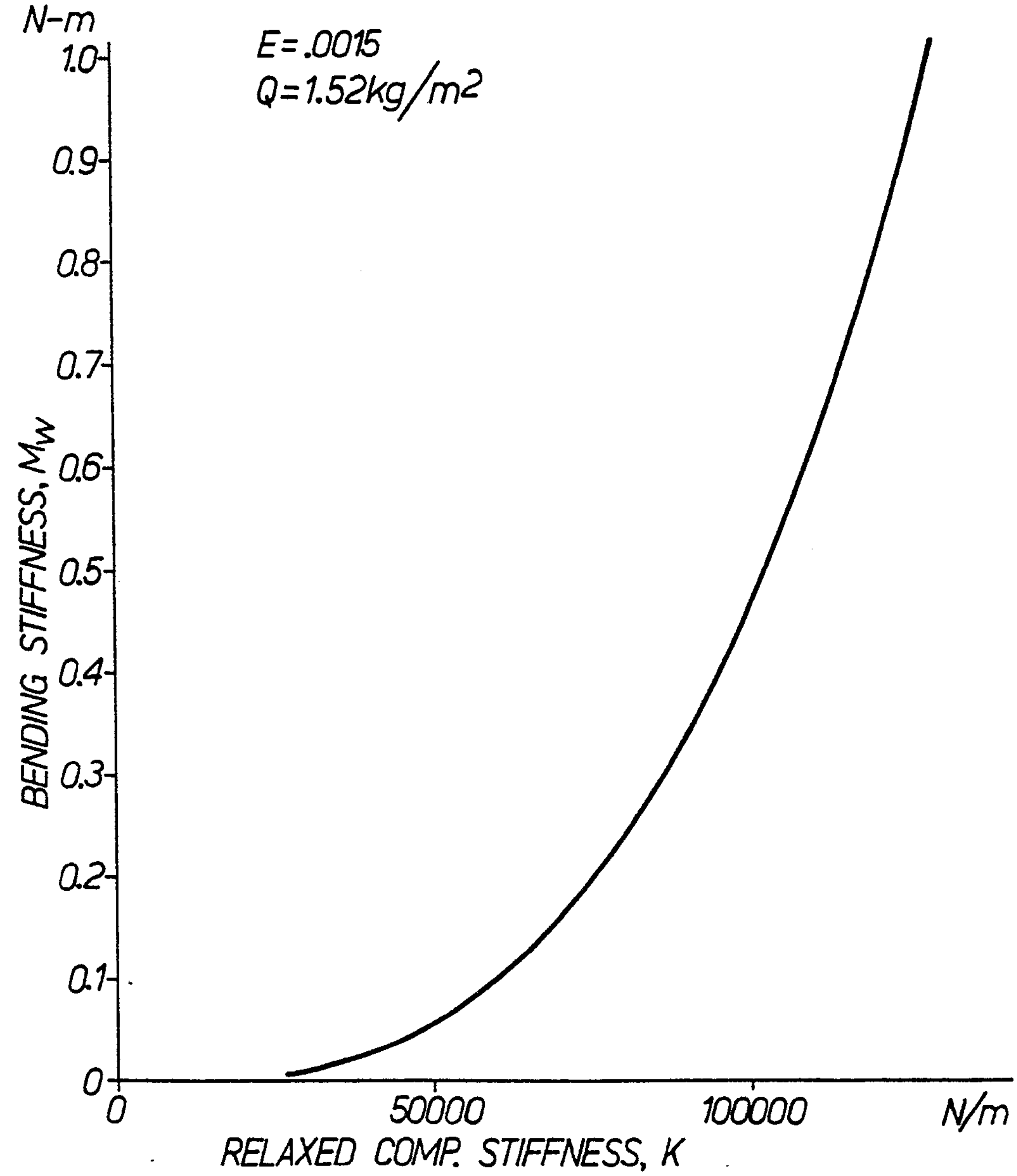
N-m
E=.0015
Q=1.52kg/m2
1.0
0.9
0.8
0.7
0.6
0.5
0.4
0.3
0.2
0.1
0
BENDING STIFFNESS, $M_W$
0
50000
100000
N/m
RELAXED COMP. STIFFNESS, K

FIG. 15.